(19)

**Europäisches Patentamt**
**European Patent Office**
**Office européen des brevets**

(11) **EP 4 524 108 B1**

(12) **EUROPEAN PATENT SPECIFICATION**

(45) Date of publication and mention
of the grant of the patent:
**13.05.2026 Bulletin 2026/20**

(21) Application number: **24216294.9**

(22) Date of filing: **30.12.2021**

(51) International Patent Classification (IPC):
**C01G 53/00** *(2025.01)* **H01M 4/00** *(2006.01)*

(52) Cooperative Patent Classification (CPC):
**C01G 53/42; H01M 4/505; H01M 4/525;**
C01P 2002/52; C01P 2002/54; C01P 2006/40;
Y02E 60/10

(54) **OXIDATIVE DELITHIATION OF ALKALI NICKEL OXIDE**

OXIDATIVE DESLITHIIERUNG VON ALKALINICKELOXID

DÉLITHIATION OXYDATIVE D'OXYDE DE NICKEL ALCALIN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.12.2020 US 202063132319 P**

(43) Date of publication of application:
**19.03.2025 Bulletin 2025/12**

(62) Document number(s) of the earlier application(s) in
accordance with Art. 76 EPC:
**21851767.0 / 4 271 653**

(73) Proprietor: **Duracell U.S. Operations, Inc.
Wilmington, DE 19801 (US)**

(72) Inventors:
• **ZHANG, Fan
Bethel, CT 06801 (US)**
• **CHRISTIAN, Paul, A.
Bethel, CT 06801 (US)**
• **NELSON, Jennifer, A.
Waltham, 02451 (US)**
• **ANGLIN, David, L.
Bethel, CT 06801 (US)**
• **WILDGUST, Paul
Bethel, 06801 (US)**
• **BACCARO, Thomas
Bethel, CT 06801 (US)**
• **HU, Chaolan
Bethel, CT 06801 (US)**

(74) Representative: **Eisenführ Speiser
Patentanwälte Rechtsanwälte PartGmbB
Johannes-Brahms-Platz 1
20355 Hamburg (DE)**

(56) References cited:
**US-A1- 2013 252 108    US-A1- 2018 331 361**

• **MATTEO BIANCHINI ET AL: "Hin und zurück - die
Entwicklung von LiNiO2 als
Kathodenaktivmaterial", ANGEWANDTE
CHEMIE, WILEY - V C H VERLAG GMBH & CO.
KGAA, DE, vol. 131, no. 31, 2 May 2019
(2019-05-02), pages 10542 - 10569, XP071379674,
ISSN: 0044-8249, DOI: 10.1002/ANGE.201812472**

## Description

### FIELD OF THE DISCLOSURE

The disclosure relates generally to the oxidative demetallation of an alkali nickel oxide. More specifically, the disclosure relates to the oxidative demetallation of an alkali nickel oxide using a multi-step hybrid process including treatment with a persulfate salt and separate, subsequent treatment with a mineral acid.

### BACKGROUND

Alkali metal-containing transition metal oxides can be energetically activated or "charged" for the purpose of preparing highly oxidized cathode materials for use in both primary and secondary electrochemical cells. Charging of the alkali metal-containing transition metal oxides comprises oxidation of the transition metal and removal of the alkali metal from the metal oxide crystal lattice, in part or in whole, to form an alkali metal-deficient transition metal oxide electrochemically active cathode material. The alkali metal-containing transition metal oxides can be chemically charged or electrochemically charged. Methods of chemically charging the alkali metal-containing transition metal oxides can include oxidative demetallation and acid-promoted disproportionation of the transition metal, e.g., by treatment with a mineral acid.

It is known that acid-promoted disproportionation of alkali metal-containing transition metal oxides including metals such as Mn and Ni results in extraction of essentially all the alkali metal ions present from the crystal lattice as well as oxidation of at most 50% of the metal, for example from an M(III) oxidation state to an M(IV) oxidation state. A corresponding amount of the M(III) is reduced to M(II), which dissolves in the acid solution.

The acid-promoted disproportionation reaction can be summarized, using stoichiometric layered lithium nickel oxide as an example, as follows in Equation 1:

$$LiNiO_2 + 2y\ H_2SO_4 \rightarrow (1\text{-}y)Li_{(1\text{-}2y)/(1\text{-}y)}NiO_2 + y\ NiSO_4 + y\ Li_2SO_4 + 2y\ H_2O\quad (0 \leq y \leq \tfrac{1}{2}).\quad (1)$$

The Ni(II) ions are soluble and dissolve in the aqueous acid solution. Thus, use of an acid-promoted metal disproportionation reaction to chemically charge an alkali metal containing transition metal oxide is very inefficient since at least half of the M(III) ions in the starting transition metal oxide are reduced to M(II) ions that can dissolve in the acid solution and, thus, are extracted out of the crystal structure Further, the dissolution of M(II) ions results in a reduction in the average particle size of the transition metal oxide.

Chemically charging an alkali metal-containing transition metal oxide with a strong, soluble chemical oxidant can be used to directly oxidize the transition metal to a higher oxidation state and result in the removal of a proportional amount of alkali metal ions to maintain overall electroneutrality of the crystal lattice. Various reagents such as strongly oxidizing gases (e.g., ozone, chlorine or bromine), strongly oxidizing solid reagents (e.g., nitrosonium hexafluorophosphate, nitrosonium tetrafluorborate, nitrosonium hexafluoroarsenate, nitronium tetrafluoroborate, nitronium hexafluorophosphate, nitronium hexafluoroarsenate), and water soluble oxidizing agents (e.g., alkali or alkaline earth metal hypochlorites (e.g., $Na^+$, $K^+$, $Ca^{2+}$), alkali peroxydisulfates (e.g., $Na^+$, $K^+$), ammonium peroxydisulfate, and alkali monopersulfates (e.g., $Na^+$, $K^+$) have been used to chemically charge alkali metal-containing transition metal oxides. Other water soluble oxidizing agents include alkali permanganates (e.g., $K^+$, $Na^+$, $Li^+$) and alkali ferrates (e.g., $K^+$). Methods using water soluble oxidizing agents are typically performed near room temperature over 24 to 48 hours; however such methods often lack sufficient oxidation strengths to rapidly and sufficiently oxidize the transition metal and demetallate the starting alkali metal-containing transition metal oxide to prepare an alkali metal-deficient metal oxide having a formula of $A_xMO_2$ or $A_xM_2O_4$ where A is the alkali metal and M is the transition metal, for example, wherein x is less than about 0.3.

US 2018/331361 discloses non-stoichiometric beta-delithiated layered nickel oxide having a chemical formula. The chemical formula is $Li_xA_yNi_{1+a\text{-}z}M_zO_2$ with $0.02 \leq x \leq 0.20$; $0.03 \leq y \leq 0.2$; $0.02 \leq a \leq 0.2$; $0 \leq z \leq 0.2$; and $0 \leq n \leq 1$. Within the chemical formula, A is an alkali metal and includes potassium, rubidium, cesium, and any combination thereof. Within the chemical formula M comprises an alkaline earth metal, a transition metal, a non-transition metal, and any combination thereof. The method for producing the non-stoichiometric betadelithiated layered nickel oxide is described in only a general manner, starting from nonstoichiometric lithium nickelate, which is chemically oxidized to form first a non-stoichiometric alpha-delithiated layered nickel oxide. As suitable oxidants, sodium hypochlorite, sodium peroxydisulfate, potassium peroxydisulfate, ammonium peroxydisulfate, sodium permanganate, potassium permanganate, sodium dichromate, potassium dichromate, ozone gas, chlorine gas, bromine gas, sulfuric acid, hydrochloric acid, and nitric acid are mentioned.

Matteo Bianchini et al., "Hin und zurück die entwicklung von LiNiO2 als Kathodenaktivmaterial" Angewante Chemie, 131(31):10542-69 (May 2019) is a review of $LiNiO_2$ that discloses the effect of lithium non-stoichiometry on the physiochemical properties and addresses the main instability issues affecting the material and the strategies implemented to address these issues.

US 2013/252108 discloses metal-doped nickel (IV) oxide active materials. The method for producing the nickel (IV) material is described, starting from a lithium nickel oxide precursor, which is treated with a strong mineral acid at a temperature below ambient temperature.

Thus, known methods of chemically charging alkali metal-containing, layered transition metal oxides have multiple drawbacks such as low yields due to the disproportionation of the transition metal, incomplete oxidation of the transition metal, and/or extended treatment times, for example, 12-72 hours, and expensive reagents (e.g., nitrosonium salts, nitronium salts).

## SUMMARY

One aspect of the disclosure provides a method of preparing an electrochemically active cathode material including the steps of: (a) combining an alkali metal-containing layered nickel oxide having a formula $A_{1-a}Ni_{1+a}O_2$, wherein A comprises an alkali metal and $0 < a \leq 0.2$, with a fluid composition including a chemical oxidant comprising a peroxydisulfate salt, a monopersulfate salt, or a combination thereof to form a mixture; (b) heating the mixture, for at least a period of time sufficient to form a Ni(IV) containing mixture, the Ni(IV) containing mixture comprising a Ni(IV) containing alkali metal-deficient layered nickel oxide electrochemically active cathode material, the Ni(IV) containing mixture having a total nickel (Ni) content; (c) combining the Ni(IV) containing mixture of step (b) with a mineral acid, wherein the mineral acid is added in an amount of about 0.60 moles or less per mole of total nickel; and (d) heating the mixture of step (c) for at least a period of time sufficient to form an additional amount of the Ni(IV) containing alkali metal-deficient layered nickel oxide electrochemically active cathode material, the Ni(IV) containing alkali metal-deficient layered nickel oxide electrochemically active cathode material formed during steps (b) and (d) having a general formula $A_xH_yNi_{1+a}O_2$, wherein A comprises an alkali metal; $0.08 \leq x < 0.2$; $0 \leq y < 0.3$; and $0.02 \leq a \leq 0.2$.

Further aspects and advantages will be apparent to those of ordinary skill in the art from a review of the following detailed description. While the compositions and methods are susceptible of embodiments in various forms, the description hereafter includes specific embodiments with the understanding that the disclosure is illustrative, and is not intended to limit the disclosure to the specific embodiments described herein.

## BRIEF DESCRIPTION OF THE DRAWINGS

While the specification concludes with claims particularly pointing out and distinctly claiming the subject matter, which is regarded as forming the present invention, it is believed that the invention will be better understood from the following description taken in conjunction with the accompanying drawings.

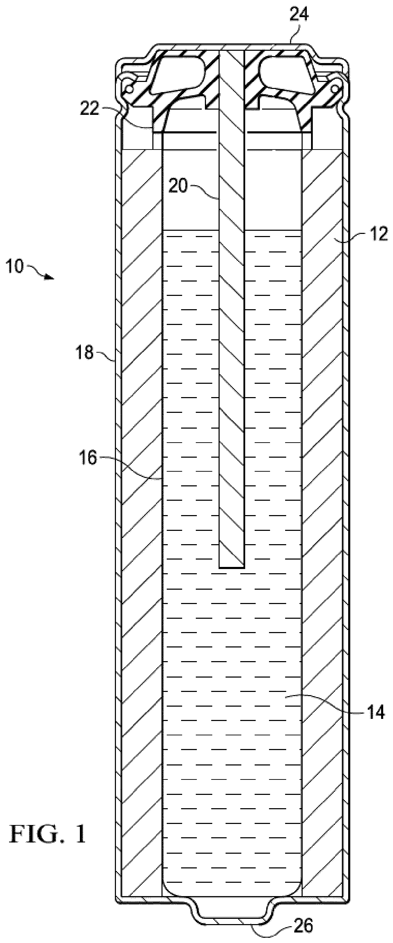

FIG. 1 is a cross-section of an embodiment of a primary alkaline battery of the disclosure.

## DETAILED DESCRIPTION

The disclosure provides a method of preparing an electrochemically active cathode material including the steps of (a) combining an alkali metal-containing layered nickel oxide having a formula $A_{1-a}Ni_{1+a}O_2$, wherein A comprises an alkali metal and $0 < a \leq 0.2$, with a fluid composition including a chemical oxidant comprising a peroxydisulfate salt, a monopersulfate salt, or a combination thereof to form a mixture; (b) heating the mixture for at least a period of time sufficient to form a Ni(IV) containing mixture, the Ni(IV) containing mixture comprising an Ni(IV) containing alkali metal-deficient layered nickel oxide electrochemically active cathode material, the Ni(IV) containing mixture having a total nickel (Ni) content; (c) combining the Ni(IV) containing mixture of step (b) with a mineral acid, wherein the mineral acid is added in an amount of about 0.60 moles or less per mole of total nickel; and (d) heating the mixture of step (c) for at least a period of time sufficient to form an additional amount of Ni(IV) containing alkali metal-deficient layered nickel oxide electrochemically active cathode material, the Ni(IV) containing alkali metal-deficient layered nickel oxide electrochemically active cathode material formed during steps (b) and (d) having a general formula $A_xH_yNi_{1+a}O_2$, wherein A comprises an alkali metal; $0.08 \leq x < 0.2$; $0 \leq y < 0.3$; and $0.02 \leq a \leq 0.2$.

It is known in the art that peroxydisulfate salts and monopersulfate salts can undergo autocatalytic thermal decomposition in aqueous solutions, evolving oxygen gas and forming sulfuric acid as decomposition products, at temperatures above 50°C, in particular, at temperatures above 60°C, 65°C, 70°C or at about 80° and above. Further, it is known in the art that alkali metal-containing layered nickel oxides can undergo acid promoted disproportionation in the presence of a mineral acid such as sulfuric acid. This disproportionation reaction can be summarized, for example, as follows for the layered lithium nickel oxide, as follows in Equation 2:

$$\text{LiNiO}_2 + 2y\,\text{H}_2\text{SO}_4 \rightarrow (1\text{-}y)\text{Li}_{(1-2y)/(1-y)}\text{NiO}_2 + y\,\text{NiSO}_4 + y\,\text{Li}_2\text{SO}_4 + 2y\,\text{H}_2\text{O} \quad (0 \leq y \leq 0.5). \quad (2)$$

Thus, one of ordinary skill in the art would expect that at temperatures of greater than about 50°C, for example about 60°C and above, the oxidant would begin decomposing and forming sulfuric acid, which would be expected to promote disproportionation of the alkali metal-containing layered nickel oxide, resulting in a maximum of about a 50% or less yield of the Ni(IV) containing alkali metal-deficient layered nickel oxide, relative to the initial amount of the alkali metal-containing layered nickel oxide.

Moreover, it is known in the art that solubilized Ni(II) ions, which are formed during disproportionation, can catalyze the decomposition of peroxydisulfate salts and monopersulfate salts forming sulfuric acid as a decomposition product. Such further breakdown of the oxidant would be expected by one of ordinary skill in the art to reduce yields of the Ni(IV) containing alkali metal-deficient layered nickel oxide even further, due to decreased amounts of oxidant available for the oxidative demetallation reaction as well as the generation of increased amounts of sulfuric acid available to promote the disproportionation reaction.

Without intending to be bound by theory, it is believed that there are three basic stages resulting in the oxidation/reduction of nickel during the two step methods of the disclosure. The first stage is an oxidative demetallation that occurs during the treatment of the non-stoichiometric alkali metal-containing layered nickel oxide with the oxidant comprising the peroxydisulfate salt and/or the monopersulfate salt. In this stage, a portion of the Ni(III) of the alkali metal-containing layered nickel oxide is oxidized to Ni(IV) and a portion of the alkali metal is removed from the alkali metal-containing layered nickel oxide structure. Without intending to be bound by theory, it is believed that the removal of the alkali metal is non-uniform and the concentration of residual alkali metal near the surface of particles of the starting alkali metal-containing layered nickel oxide is lower than that in the center of the particles. Without intending to be bound by theory, it is further believed that the concentration of residual alkali metal at the center of the particles is limited by the rate of alkali metal ion diffusion, such that the resulting particles of demetallated layered nickel oxide have a "core/shell" type of structure, with localized regions of high degree of demetallation adjacent to the outer surfaces thereof and little to no demetallation in the interior regions thereof. Without intending to be bound by theory, it is believed that little or no soluble $Ni^{2+}$ ions are formed during the first stage.

The second stage includes predominantly disproportionation of the partially demetallated layered nickel oxide by treatment with the mineral acid. Without intending to be bound by theory, it is believed that during disproportionation, the mineral acid is able to access the interior or core regions of particles of the partially demetallated layered nickel oxide material such that the remaining Ni(III) undergoes disproportionation to Ni(IV) and soluble $Ni^{2+}$ ions. Further, without intending to be bound by theory, it is believed that as the Ni(III) in the interior or core regions of the particles of the layered nickel oxide is oxidized to Ni(IV), soluble $Ni^{2+}$ ions dissolve from the surface of the particles along with additional alkali metal ions from the interior or core regions of the particles, such that the demetallation is more uniform and there is less of a gradient in alkali metal concentration from the surface to the core regions of the particles.

The third stage is direct reduction of the Ni(IV) in the Ni(IV) containing layered nickel oxide to soluble $Ni^{2+}$ ions. Without intending to be bound by theory, it is believed that at highly acidic pH, Ni(IV) can be reduced to Ni(II) and the extent of this reduction is proportional to the temperature of the mixture as well as the concentration of the acid.

It was surprisingly and unexpectedly found that methods of the disclosure for the conversion of the alkali metal-containing layered nickel oxide to the Ni(IV) containing alkali metal-deficient layered nickel oxide can include heating the alkali metal-containing layered nickel oxide with the oxidant at a temperature of less than 60°C, for example, in a range of from about 40°C to less than 60°C, to remove approximately 50% of the alkali metal from the alkali metal-containing layered nickel oxide, without significant formation of soluble $Ni^{2+}$ ions.

Thus, the method of the disclosure advantageously provide one or more benefits, for example, providing an oxidative demetallation process having relatively short treatment time, providing Ni(IV) containing alkali metal-deficient layered nickel oxides in relatively high yield (e.g., greater than about 70%), minimizing environmentally hazardous waste solutions containing $Ni^{2+}$ and sulfuric acid, providing Ni(IV) containing alkali metal-deficient layered nickel oxide particles having a larger particle size distribution (PSD) than Ni(IV) containing alkali metal-deficient layered nickel oxide particles prepared from a method using a persulfate treatment alone or an acid-wash treatment alone, and/or providing Ni(IV) containing alkali metal-deficient layered nickel oxides having high discharge capacity. Additionally, the methods of the disclosure can be controlled to provide an alkali metal deficient layered nickel oxides that can be stabilized with alkali metal hydroxides without forming significant amounts of gamma-nickel oxyhydroxide (γ-NiOOH) as a side product. As used herein, and unless specified otherwise, "significant amounts of γ-NiOOH side products" refers to an amount of γ-NiOOH in the stabilized product of about 11% by weight or greater, based on the total weight of the product. In embodiments, the amount of γ-NiOOH in the stabilized product can be less than about 10 wt.%, less than about 8%, less than about 6%, less than about 5%, less than about 4%, less than about 3%, less than about 2%, or less than about 1%, by weight.

The term "about" is used according to its ordinary meaning, for example, to mean approximately or around. In one embodiment, the term "about" means ±10% of a stated value or range of values. In another embodiment, the term "about" means ±5% of a stated value or range of values. A value or range described in combination with the term "about" expressly includes the specific value and/or range as well (e.g., for a value described as "about 40," "40" is also expressly contemplated).

As used herein, a Ni(IV) containing alkali metal-deficient layered nickel oxide electrochemically active cathode material that has a "high discharge capacity" refers to a Ni(IV) containing alkali metal-deficient layered nickel oxide having a gravimetric discharge capacity equal to or greater than about 420 mAh/g, when discharged at a low discharge rate as the cathode active material in an alkaline cell. As used herein, and unless specified otherwise, a "low discharge rate" refers to a fully charged battery that discharges over the course of about 30 to about 40 hours, i.e., a battery having about C/30 to about C/40 rate. The C-rate is a well understood measurement in the art that communicates the rate at which a battery is discharged relative to its theoretical rated capacity. It is defined as the discharge current divided by the theoretical discharge current under which the battery would deliver its total nominal/theoretical rated capacity in 1 hour. For example, a 1C discharge rate for a material having a gravimetric discharge capacity of about 420 mAh/g would deliver the total 420 mAh/g capacity in 1 hour. A 2C rate for the material having a gravimetric discharge capacity of about 420 mAh/g would deliver the total 420 mAh/g capacity in 0.5 hour. A C/2 rate for the material having a gravimetric discharge capacity of about 420 mAh/g would deliver the 420 mAh/g in 2 hours. Thus, a C/40 rate for the material having a gravimetric discharge capacity of about 420 mAh/g would deliver the total 420 mAh/g capacity in 40 hours.

Alkali metal-deficient layered nickel oxide electrochemically active cathode materials prepared solely by treatment of alkali metal-containing layered nickel oxide with aqueous sulfuric acid typically have a low discharge rate (e.g., C/40) gravimetric discharge capacity in a range of about 390 to about 420 mAh/g. Thus, the methods of the disclosure can provide electrochemically active cathode materials having comparable, if not higher, low rate discharge capacities than materials prepared by other methods known in the art. In embodiments, the alkali metal-deficient layered nickel oxide electrochemically active cathode material has a gravimetric discharge capacity equal to or greater than about 390 mAh/g when discharged at a low discharge rate as the cathode active material in an alkaline electrochemical cell, for example, in a range of about 400 mAh/g to about 550 mAh/g, about 400 mAh/g to about 500 mAh/g, about 405 mAh/g to about 490 mAh/g, about 410 mAh/g to about 480 mAh/g, about 415 mAh/g to about 470 mAh/g, about 420 mAh/g to about 460 mAh/g, greater than about 405 mAh/g, greater than about 410 mAh/g, greater than about 415 mAh/g, greater than about 420 mAh/g, for example, about 425 mAh/g, about 430 mAh/g, about 435 mAh/g, about 440 mAh/g, about 460 mAh/g, about 480 mAh/g and/or about 500 mAh/g.

## ALKALI METAL-CONTAINING LAYERED NICKEL OXIDE

In general, the alkali metal-containing layered nickel oxide to be oxidatively demetallated can be a stoichiometric or non-stoichiometric alkali metal-containing layered nickel oxide. The non-stoichiometric alkali metal-containing layered nickel oxide has a general formula $A_{1-a}Ni_{1+a}O_2$, wherein A is an alkali metal and $0 < a \leq 0.2$. In embodiments, the alkali metal-containing layered nickel oxide can have a layered structure. A can be selected from the group consisting of lithium, sodium, potassium, and a combination thereof. In embodiments, A comprises lithium. In embodiments, some of the alkali metal in the alkali metal-containing layered nickel oxide can be substituted with a metal ion having a similar ionic radii, for example, $Li^+$, $Ni^{2+}$, $Ni^{3+}$, $Na^+$, $K^+$, $Cs^+$, $Rb^+$, $Ag^+$, $Mg^{2+}$, $Ca^{2+}$, $Zn^{2+}$, and $Bi^{3+}$, in a range of 0 to about 10 wt.%, based on the total weight of A in the structure. Without intending to be bound by theory, it is believed that the ionic radii of $Rb^+$ and $Cs^+$ are too large to be the primary alkali metal as they are unable to form a stable layered structure having a structure equivalent to lithium nickel oxide or sodium nickel oxide.

In embodiments, the non-stoichiometric alkali metal-containing layered nickel oxide can include a metal dopant, M, and have a formula $A_{1-a}Ni_{1+a-z}M_zO_2$, wherein A comprises an alkali metal, $0 < a \leq 0.2$, M comprises a transition metal or main group metal, and $0 \leq z \leq 0.2$.

In embodiments of the non-stoichiometric alkali metal-containing layered nickel oxide, $0 < a \leq 0.2$, for example, 0.01 to 0.20, 0.01 to 0.18, 0.01 to 0.16, 0.01 to 0.15, 0.02 to 0.20, 0.02 to 0.18, 0.02 to 0.16, 0.02 to 0.15, 0.03 to 0.20, 0.03 to 0.19, 0.03 to 0.15, 0.03 to 0.12, 0.05 to 0.19, or 0.05 to 0.15. Because a is always greater than 0, there are alkali metal sites in the crystal lattice which do not include alkali metal ions but, instead, can be vacant or occupied by excess Ni(II) ions, thereby providing a non-stoichiometric amount of nickel and alkali metal, relative to the stoichiometric counterpart having a general formula $ANiO_2$ or $ANi_{1-z}M_zO_2$.

In embodiments, wherein the alkali metal-containing layered nickel oxide includes a metal dopant, M, the metal dopant can include a transition metal, main group metal, or both. In general, the metal dopant is a metal that can access an oxidation state of +3 or greater and has an ionic radius comparable to that of the Ni(III) in a low-spin or high-spin octahedral site (about 0.56 Å to about 0.60 Å), for example, in a range of about 0.45 Å to about 0.75 Å, or about 0.50 Å to about 0.75 Å. In embodiments, the transition metal comprises cobalt ($Co^{3+}$, $Co^{4+}$), manganese ($Mn^{3+}$, $Mn^{4+}$), iron ($Fe^{3+}$, $Fe^{4+}$), chromium ($Cr^{3+}$, $Cr^{4+}$), vanadium ($V^{3+}$, $V^{5+}$), titanium ($Ti^{3+}$, $Ti^{4+}$), niobium ($Nb^{3+}$, $Nb^{5+}$), zirconium ($Zr^{4+}$) or a combination thereof. In embodiments, the transition metal comprises cobalt, manganese, iron or a combination thereof. In embodiments, the transition metal comprises cobalt. In embodiments, the transition metal comprises manganese. In embodiments, the transition metal comprises cobalt and manganese. The main group metal can be selected from the group consisting of aluminum ($Al^{3+}$), gallium ($Ga^{3+}$), bismuth ($Bi^{5+}$), and a combination thereof. In embodiments, the main group metal comprises aluminum.

In embodiments wherein the alkali metal-containing layered nickel oxide includes a metal dopant, z can be $0 \leq z \leq 0.2$ or $0 < z \leq 0.2$, for example, 0 to 0.20, 0.01 to 0.20, 0.01 to 0.18, 0.01 to 0.16, 0.01 to 0.15, 0.02 to 0.20, 0.02 to 0.18, 0.02 to 0.16, 0.02 to 0.15, 0.03 to 0.20, 0.03 to 0.19, 0.03 to 0.15, 0.03 to 0.12, 0.05 to 0.19, or 0.05 to 0.15. Without intending to be bound by theory, it is believed that as the amount of metal dopant in the alkali metal-containing layered nickel oxide and the Ni(IV) containing alkali metal-deficient layered nickel oxide prepared therefrom increases, the stability of an electrochemically active material including the Ni(IV) containing alkali metal-deficient layered nickel oxide to an aqueous hydroxide solution, such as an alkaline battery electrolyte, increases but the total discharge capacity can decrease, for example, when the dopant metal is not electrochemically active in the same voltage window as nickel.

In general, the alkali metal-containing layered nickel oxide is essentially nonhydrated; however, there may be excess alkali metal oxide and hydroxide from the synthesis of the alkali metal-containing layered nickel oxide present on the surface of the alkali metal-containing layered nickel oxide particles which can absorb water from ambient air. The alkali metal oxide and hydroxide also can react with carbon dioxide in the ambient air to form alkali metal carbonate on the surface of the alkali metal-containing layered nickel particles.

## ALKALI METAL-DEFICIENT LAYERED NICKEL OXIDE ELECTROCHEMICALLY ACTIVE CATHODE MATERIAL

In general, the Ni(IV) containing alkali metal-deficient layered nickel oxide electrochemically active cathode material that is formed according to the method disclosed herein has a general formula $A_xH_yNi_{1+a}O_2$, wherein A comprises an alkali metal; $0.08 \leq x < 0.2$; $0 \leq y < 0.3$; and $0.02 \leq a \leq 0.2$. The Ni(IV) containing alkali metal-deficient layered nickel oxide is also referred to herein as alpha-demetallated layered nickel oxide. The average oxidation state of the nickel in the alpha-demetallated nickel oxide is generally between 3+ and 4+ as the alpha-demetallated layered nickel oxide will include a significant portion of nickel in the 4+ oxidation state as well as some nickel in the 3+ oxidation state. As described below, the alpha-demetallated layered nickel oxide also includes a portion of nickel in the 2+ or 3+ oxidation state located in alkali metal sites of the crystal lattice. It will be understood that the A in the formula for the alpha-demetallated layered nickel oxide electrochemically active cathode material will be the same as the A in the formula for the alkali-metal containing layered nickel oxide material used to prepare the alpha-demetallated material. Thus, A can be selected from the group consisting of lithium, sodium, potassium, and a combination thereof. In embodiments, A is lithium. In embodiments, some of the alkali metal in the alkali metal-containing layered nickel oxide can be substituted with a metal ion having a similar ionic radii, for example, $Li^+$, $Ni^{2+}$, $Ni^{3+}$, $Na^+$, $K^+$, $Cs^+$, $Rb^+$, $Ag^+$, $Mg^{2+}$, $Ca^{2+}$, $Zn^{2+}$, and $Bi^{3+}$.

In embodiments, the alpha-demetallated layered nickel oxide can include a metal dopant, M, and have a formula $A_xH_yNi_{1+a-z}M_zO_2$, wherein A comprises an alkali metal; $0.08 \leq x < 0.2$; $0 \leq y < 0.3$; $0.02 \leq a \leq 0.2$; M comprises a transition metal or a main group metal, $0 \leq z \leq 0.2$.

In embodiments, including those including a metal dopant, the alpha-demetallated layered nickel oxide can have a value of x in a range of $0.08 < x < 0.2$, for example, 0.08 to 0.20, 0.08 to 0.18, 0.08 to 0.16, 0.08 to 0.15, 0.09 to 0.20, 0.09 to 0.19, 0.09 to 0.15, 0.09 to 0.12, 0.10 to 0.19, or 0.10 to 0.15. A value of x for the alpha-demetallated layered nickel oxide below about 0.08 can be the result of one or more of an excess amount of the oxidant provided during the oxidative demetallation, too high of a reaction temperature during the oxidative demetallation, and/or too long reaction time for the oxidative demetallation, and thus it is desirable to control these parameters. A value of x for the alpha-demetallated layered nickel oxide above about 0.2 can be the result of one or more of an insufficient amount of the oxidant provided during the oxidative demetallation, too low of a reaction temperature for the oxidative demetallation, and/or too short reaction time for the oxidation demetallation, further demonstrating that it is desirable to control these parameters. Without intending to be bound by theory, it is believed that as the amount, x, of alkali metal, A, in the alpha-demetallated layered nickel oxide decreases below about 0.08, for example, 0.06, 0.04, 0.02, or less, the alpha-demetallated layered nickel oxide is disadvantageously more likely to form gamma-nickel oxyhydroxide when treated with an aqueous solution of an alkali hydroxide rather than the desirable stabilized form of the Ni(IV) containing alkali metal-deficient layered nickel oxide (which has an additional alkali metal ion inserted into vacant sites in layers thereof and has the formula $A_yA'_vNi_{1+a}O_2 \cdot n\text{-}H_2O$, wherein A includes Li or Na; A' includes K, Rb, or Cs; $0.08 \leq x < 0.2$; $0.03 < v < 0.20$; $0.02 < a \leq 0.2$; and $0 < n < 2$, as described in detail below). Further, without intending to be bound by theory, it is believed that as the amount, x, of alkali metal, A, of the alpha-demetallated layered nickel oxide increases above about 0.2, the capacity of the prepared alpha-demetallated layered nickel oxide (as well as the stabilized layered nickel oxide prepared therefrom) decreases as a result of the presence of unoxidized Ni(III) (i.e., unconverted alkali metal-containing layered nickel oxide starting material).

In embodiments, including those including a metal dopant, the alpha-demetallated layered nickel oxide can have a value of y in a range of $0 \leq y < 0.3$, for example, 0 to 0.29, 0.05 to 0.29, 0.05 to 0.25, 0.5 to 0.20, 0.5 to 0.15, 0.08 to 0.29, 0.08 to 0.25, 0.08 to 0.20, 0.08 to 0.15, 0.10 to 0.29, 0.10 to 0.25, 0.10 to 0.20, or 0.10 to 0.15. $H^+$ can be introduced into the crystal structure during the oxidative demetallation process via ion-exchange with the alkali metal cation. In particular, when the oxidative demetallation is performed in an aqueous solution, under some conditions water can react with the oxidant to form $H^+$ ions which can subsequently partially ion exchange with the alkali metal cations, especially at high temperatures.

In embodiments, including those including a metal dopant, the alpha-demetallated layered nickel oxide can have a value of a in a range of $0.02 \leq a \leq 0.2$, for example, 0.02 to 0.20, 0.02 to 0.18, 0.02 to 0.16, 0.02 to 0.15, 0.03 to 0.20, 0.03 to 0.18, 0.03 to 0.16, 0.03 to 0.15, 0.04 to 0.20, 0.04 to 0.18, 0.04 to 0.15, 0.04 to 0.12, 0.05 to 0.19, or 0.05 to 0.15. Because a must be greater than 0, there are alkali metal sites in the crystal lattice which do not include an alkali metal ion but, instead, are occupied by $Ni^{2+}$ or $Ni^{3+}$ ions thereby providing an excess, non-stoichiometric amount of nickel. It will be appreciated by one of ordinary skill in the art that some alkali metal sites in the crystal lattice can be vacant and, further, that charge neutrality of the structure will be maintained by substitution of one $Ni^{2+}$ ion for 2 $Li^{+}$ ions, or one $Ni^{3+}$ ion for 3 $Li^{+}$ ions (or one $Ni^{2+}$ ion and one $Li^{+}$ ion). Also, substitution of $H^{+}$ for $Li^{+}$ will maintain charge neutrality of the structure.

In embodiments wherein the alkali metal-containing layered nickel oxide containing starting material includes a metal dopant, M, it will be understood that the M in the formula for the alpha-demetallated layered nickel oxide electrochemically active cathode material will be the same as the M in the formula for the alkali-metal containing layered nickel oxide material used to prepare the alpha-demetallated material. Thus, M can include a transition metal, main group metal, or both. In general, the metal dopant is a metal that can access an oxidation state of +3 or greater and has an ionic radius comparable to that of the Ni(III).

In embodiments, the transition metal comprises cobalt ($Co^{3+}$, $Co^{4+}$), manganese ($Mn^{3+}$, $Mn^{4+}$), iron ($Fe^{3+}$, $Fe^{4+}$), chromium ($Cr^{3+}$, $Cr^{4+}$,), vanadium ($V^{3+}$, $V^{5+}$), titanium ($Ti^{3+}$, $Ti^{4+}$), niobium ($Nb^{3+}$, $Nb^{5+}$), zirconium ($Zr^{4+}$) or a combination thereof.. In embodiments, the transition metal comprises cobalt, manganese, or a combination thereof. In embodiments, the transition metal comprises cobalt. In embodiments, the transition metal comprises manganese. In embodiments, the transition metal comprises cobalt and manganese. In embodiments, the transition metal comprises cobalt and manganese. The main group metal can be selected from the group consisting of aluminum ($Al^{3+}$), gallium ($Ga^{3+}$), bismuth ($Bi^{5+}$), and a combination thereof. In embodiments, the main group metal comprises aluminum.

In embodiments wherein the alpha-demetallated layered nickel oxide material includes a metal dopant, z can have a value in a range of $0 \leq z \leq 0.2$ or $0 < z \leq 0.2$, for example, 0 to 0.20, 0.01 to 0.20, 0.01 to 0.18, 0.01 to 0.16, 0.01 to 0.15, 0.02 to 0.20, 0.02 to 0.18, 0.02 to 0.16, 0.02 to 0.15, 0.03 to 0.20, 0.03 to 0.19, 0.03 to 0.15, 0.03 to 0.12, 0.05 to 0.19, or 0.05 to 0.15. Without intending to be bound by theory, it is believed that as the amount of metal dopant in the alpha-demetallated layered nickel oxide increases, the stability of an electrochemically active material including the alpha-demetallated layered nickel oxide to an aqueous alkali metal hydroxide solution, such as an alkaline battery electrolyte, increases but the total discharge capacity can decrease, for example, when the dopant metal is not electrochemically active in the same voltage window as nickel.

## METHODS OF PREPARING AN ELECTROCHEMICALLY ACTIVE CATHODE MATERIAL

In general, the method of preparing an electrochemically active cathode material includes (a) combining an alkali metal-containing layered nickel oxide having a general formula $A_{1-a}Ni_{1+a}O_2$, wherein A comprises an alkali metal and $0 < a \leq 0.2$ with a fluid composition (e.g., a suspension, dispersion, or solution) including an oxidant comprising a peroxydisulfate salt, a monopersulfate salt, or a combination thereof to form a mixture (e.g., a suspension, dispersion, or solution), (b) heating the mixture for at least a period of time sufficient to form a Ni(IV) containing mixture, the Ni(IV) containing mixture comprising a Ni(IV) containing alkali metal-deficient layered nickel oxide electrochemically active cathode material and the Ni(IV) containing mixture having a total nickel (Ni) content, (c) adding to the Ni(IV) containing mixture of step (b) a mineral acid, wherein the mineral acid is added in an amount of about 0.60 moles or less, per mole of total nickel, and (d) heating the mixture of step (c) for at least a period of time sufficient to form an additional amount of the Ni(IV) containing alkali metal-deficient layered nickel oxide electrochemically active cathode material, wherein the Ni(IV) containing alkali metal-deficient layered nickel oxide electrochemically active cathode material formed during steps (b) and (d) have the general formula $A_xH_yNi_{1+a}O_2$, wherein A comprises an alkali metal, $0.08 \leq x < 0.2$, $0 \leq y < 0.3$, and $0.02 < a \leq 0.2$, or $A_xH_yNi_{1+a-z}M_zO_2$, wherein A comprises an alkali metal; $0.08 \leq x < 0.2$; $0 \leq y < 0.3$; $0.02 \leq a \leq 0.2$; M comprises a transition metal or a main group metal, and $0 \leq z \leq 0.2$.

As used herein, and unless specified otherwise, the "total nickel content" of the Ni(IV) containing mixture refers to the total amount of nickel present in the mixture, regardless of the oxidation state. The Ni(IV) containing mixture of step (b) can include Ni(III) present in the form of unreacted, alkali metal-containing layered nickel oxide starting material, $A_{1-a}Ni_{1+a}O_2$ or $A_{1-a}Ni_{1+a-z}M_zO_2$, Ni(IV) present in the form of oxidized alkali metal-deficient layered nickel oxide, $A_xH_yNi_{1+a}O_2$ or $A_xH_yNi_{1+a-z}M_zO_2$, and excess Ni in the form of Ni(II) or Ni(III) present in the alkali metal layers of any of the foregoing starting materials ($Ni^{2+}$) or alkali metal-deficient layered nickel oxides ($Ni^{2+}$ and $Ni^{3+}$). The total nickel content in step (b) corresponds to the total nickel content of the starting material alkali metal-containing layered nickel oxide in step (a), wherein in step (a) the nickel is present as Ni(III) in the nickel oxide layers and as $Ni^{2+}$ in the interlayer alkali metal sites of the crystal lattice.

The oxidant can include a peroxydisulfate salt, a monopersulfate salt, or a combination thereof. The terms peroxydisulfate and persulfate are used interchangeably herein. In embodiments, the oxidant comprises a peroxydisulfate salt. In embodiments, the oxidant comprises a monopersulfate salt. In embodiments, the oxidant comprises a combination of a peroxydisulfate salt and a monopersulfate salt. The peroxydisulfate and monopersulfate salts are generally water-soluble. As used herein, "water-soluble" means that at least about 10 mg of peroxydisulfate salt or monopersulfate salt is soluble in 1 ml of water at 25°C. The peroxydisulfate salt, monopersulfate salt, or both can include a counter cation selected form the group consisting of sodium, potassium, lithium, ammonium, or a combination thereof. In embodiments, the counter cation of the oxidant includes a sodium cation. In embodiments, the counter cation of the oxidant includes a potassium cation. In embodiments, the counter cation of the oxidant comprises two different cations selected from the group consisting of ammonium, sodium, and potassium. In embodiments, the oxidant is a peroxydisulfate salt and the counter cation is selected from the group consisting of ammonium, sodium, potassium, lithium, and a combination thereof. In embodiments, the oxidant is a peroxydisulfate salt and the counter cation comprises two different counter cations selected from the group consisting of ammonium, sodium, and potassium. In embodiments, the oxidant is a peroxydisulfate salt and the counter cation comprises sodium. In embodiments, the oxidant is a peroxydisulfate salt and the counter cation comprises potassium. In embodiments, the oxidant is a peroxydisulfate salt and the counter cation comprises ammonium. In embodiments, the oxidant comprises peroxydisulfate salt and the peroxydisulfate salt is a combination of a sodium peroxydisulfate salt and a potassium peroxydisulfate salt.

In embodiments, in step (a), the oxidant can be provided in an amount between about 0.25 moles and about 0.70 moles per mole of the alkali metal-containing layered nickel oxide, for example in an amount of about 0.25 moles, about 0.30 moles, about 0.35 moles, about 0.40 moles, about 0.45 moles, about 0.50 moles, about 0.55 moles, about 0.60 moles, about 0.65 moles, or about 0.70 moles per mole of the alkali metal-containing layered nickel oxide. In embodiments, in step (a) the oxidant can be provided in an amount between about 0.25 moles and about 0.60 moles per mole of the alkali metal-containing layered nickel oxide. In embodiments, in step (a) the oxidant can be provided in an amount between about 0.25 moles and about 0.45 moles per mole of the alkali metal-containing layered nickel oxide. In embodiments, in step (a) the alkali metal-containing layered nickel oxide and the oxidant can be provided in a molar ratio of about 1 mol alkali metal-containing layered nickel oxide :0.25 mol oxidant to about 1 mol alkali metal-containing layered nickel oxide :0.70 mol oxidant (also expressed as "1:0.25 to about 1:0.70"), for example, about 1:0.25 to about 1:0.65, about 1:0.25 to about 1:60, about 1:0.25 to about 1:0.50, about 1:0.25 to about 1:0.45, about 1:0.30 to about 1:0.70, about 1:0.30 to about 1:0.65, about 1:0.30 to about 1:0.55, about 1:0.30 to about 1:0.45, about 1:0.35 to about 1:0.70, about 1:0.35 to about 1:0.65, about 1:0.35 to about 1:0.60, about 1:0.35 to about 1:0.55, about 1:0.35 to about 1:0.50, about 1:0.35 to about 1:0.45, or about 1:0.35 to about 1:0.40.

In general, without intending to be bound by theory, it is believed that each peroxydisulfate dianion can form two sulfate radical anions. Further, without intending to be bound by theory, it is believed that each sulfate radical anion can accept 1 electron to form a sulfate dianion and, therefore, each mole of peroxydisulfate salt could theoretically oxidize two moles of alkali metal-containing layered nickel oxide. Without intending to be bound by theory, it is believed that when the alkali metal-containing layered nickel oxide and peroxydisulfate as oxidant are reacted at a temperature of about 45°C to less than about 60°C, the maximum amount of Ni(III) that is oxidized to Ni(IV) is only about 50% of the total for relatively short reaction times (i.e., less than about 4 hours), even when the oxidant is provided in an amount greater than 0.25 moles per mole of alkali metal-containing layered nickel oxide. Thus, while increasing the amount of peroxydisulfate oxidant relative to the amount of alkali metal-containing layered nickel oxide can increase the apparent rate of demetallation of the alkali metal-containing layered nickel oxide when reacted at a temperature in a range of from about 45°C to less than 60°C, increasing the amount of peroxydisulfate oxidant relative to the amount of alkali metal-containing layered nickel oxide is not expected to proportionally increase the yield of the Ni(IV) containing alkali metal-deficient layered nickel oxide in the Ni(IV) mixture. Further, without intending to be bound by theory, it is believed that when the amount of peroxydisulfate oxidant is increased beyond about 0.70 moles oxidant per mole of alkali metal-containing layered nickel oxide (i.e., nearly 50% greater than the stoichiometric amount of 0.50 moles oxidant), the increase in the rate of the demetallation reaction is negligible relative to the rate when the amount of oxidant is about 0.50 moles peroxydisulfate oxidant per mole of alkali metal-containing layered nickel oxide. Advantageously, using a sub-stoichiometric amount of a persulfate salt (i.e., less than 0.5 mole persulfate per mole nickel) minimizes the formation of sulfuric acid as a byproduct from the thermal decomposition of persulfate. Without intending to be bound by theory, it is believed that the persulfate decomposition reaction is kinetically slower than the electron transfer process from Ni(III) of the alkali metal-containing layered nickel oxide at reaction temperatures below about 60°C.

On the other hand, without intending to be bound by theory, it is believed that when the peroxydisulfate oxidant is provided in an amount in significant excess of the stoichiometric ratio theoretically needed to fully oxidize the Ni(III) of the alkali metal-containing layered nickel oxide (e.g., provided in an amount greater than 1:1, for example, in an amount of about 1.3 moles or about 1.5 moles or more of peroxydisulfate oxidant per mole of alkali metal-containing layered nickel oxide) and the peroxydisulfate oxidant and alkali metal-containing layered nickel oxide are reacted at a temperature in a range of about 50°C to about 60°C, as much as about 60% of the Ni(III) in the alkali metal-containing layered nickel oxide can be converted to Ni(IV) to form alkali metal-deficient layered nickel oxide. Thus, in embodiments, the peroxydisulfate oxidant can be provided in an amount of about 1 to about 2 moles of oxidant, about 1.3 to about 2 moles of oxidant, about 1.5 to about 2 moles of oxidant, about 1 to about 1.9 moles of oxidant, about 1.3 to about 1.8 moles or oxidant, or about 1.4 to about 1.7 moles of oxidant per mole of the alkali metal-containing layered nickel oxide. In embodiments, the peroxydisulfate oxidant can be provided in an amount of about 1.5 or about 1.6 moles per mole of the alkali metal-containing layered nickel oxide.

The fluid composition comprising the oxidant can be any fluid composition which allows the oxidant to react with the alkali metal-containing layered nickel oxide. The fluid composition can be, for example, in the form of an aqueous solution, a suspension, a slurry or other mixture of the oxidant and water and the alkali-metal containing layered nickel oxide. Without intending to be bound by theory, it is believed that the solubility of the oxidant in the fluid composition affects the rate of the oxidative demetallation reaction as well as the thermal stability of the oxidant. Without intending to be bound by theory, it is believed that in order for the oxidative demetallation to proceed, at least a portion of the oxidant should be solubilized in the fluid composition and as the solubility of the oxidant in the fluid composition increases, the rate of the oxidative demetallation reaction increases. In embodiments, the fluid composition comprises water. In embodiments, the fluid composition is provided by an aqueous solution of the oxidant. In embodiments, the fluid composition is provided by a suspension of the oxidant, for example, in which the oxidant is poorly soluble or supersaturated. In embodiments, the fluid composition comprises water and the oxidant is soluble in water at temperature of about 25°C. In embodiments, the fluid composition comprises water and the oxidant is soluble in water at a temperature of about 45°C, at a temperature of about 50°C. In embodiments, the fluid composition comprises water and the oxidant is at least partially soluble in water at a temperature of about 25°C. In embodiments, the fluid composition comprises water and the oxidant is at least partially soluble in water at a temperature of about 45°C, at a temperature of about 50°C. In embodiments, the fluid composition comprises water and the peroxydisulfate salt comprises sodium peroxydisulfate. In embodiments, the fluid composition comprises water and the peroxydisulfate salt comprises ammonium peroxydisulfate. In embodiments, the fluid composition comprises water and the peroxydisulfate salt comprises potassium peroxydisulfate.

In general, the order of operations for combining the alkali metal-containing layered nickel oxide and the oxidant is non-limiting, so long as upon combination, at least a portion of the oxidant is solubilized and dissolved in the fluid composition, thereby allowing the oxidative demetallation to proceed. In embodiments, an alkali metal-containing layered nickel oxide is added to an oxidant. In embodiments, the oxidant is added to the alkali metal-containing layered nickel oxide. For example, a solid alkali metal-containing layered nickel oxide is added to a fluid composition including the oxidant. In another example, a solid oxidant is added to a fluid composition including the solid alkali metal-containing layered nickel oxide. In a further example, a fluid composition including the oxidant is added to a second fluid composition including the solid alkali metal-containing layered nickel oxide. In any of the foregoing examples, the result of the addition is a combination of solid-phase alkali metal-containing layered nickel oxide and a fluid composition including at least a portion of the solubilized, dissolved oxidant.

In general, the fluid composition including the peroxydisulfate and/or monopersulfate salt has an initial pH, for example, in a range of 8 to 12. As the oxidative demetallation by peroxydisulfate salts and monopersulfate salts proceeds at temperatures above about 45°C or 50°C, the pH of the fluid composition decreases down to a pH of about 4 due to thermal decomposition of the peroxydisulfate or monopersulfate salts. Thus, in embodiments, during step (b) the fluid composition has a pH in a range of about 4 to 12, for example, about 4 to about 11, about 4 to about 10, or about 4 to about 9, about 9 to about 12, about 10 to about 12, or about 11 to about 12. Without intending to be bound by theory, it is believed that although the pH of the fluid composition decreases during step (b) due to the decomposition of the persulfate and oxidation of water by the sulfate radicals to form sulfuric acid, at temperatures of less than 60°C, the rate of thermal decomposition and oxidation of water is slower than the rate of oxidation of the nickel (II) and nickel (III) in the nickel oxide material and, therefore, acid-promoted disproportionation of the nickel does not have a significant affect in step (b). The pH of the fluid composition can be adjusted by including an alkali metal hydroxide or ammonium hydroxide in the composition. Thus, in some embodiments, the fluid composition further comprises an alkali metal hydroxide, an ammonium hydroxide, or a combination thereof. In some embodiments, the fluid composition is substantially free of a hydroxide salt. As used herein, and unless provided otherwise, the fluid composition is "substantially free of a hydroxide salt" when a hydroxide salt has not been intentionally added to the fluid composition and any incidental hydroxide salt is present in an amount of less than about 5 wt.% of the total weight of the fluid composition.

In general, the reaction in step (b) provides oxidative demetallation of at least a portion of alkali metal-containing layered nickel oxide. In embodiments, about 50% of the Ni(III) in the starting alkali metal-containing layered nickel oxide is oxidized to Ni(IV) in step (b). In some embodiments, a portion of the Ni(II) in the lithium sites of the starting nonstoichiometric alkali metal-containing layered nickel oxide is oxidized to Ni(III) in step (b). Without intending to be bound by theory, it is believed that the removal of alkali metal from the alkali metal-containing layered nickel oxide to form the Ni(IV) containing alkali metaldeficient layered nickel oxide is limited by the rate of diffusion of the alkali metal ions out of the alkali metal-containing layered nickel oxide particles, resulting in a non-uniform, gradientlike distribution of the residual alkali metal ions in the Ni(IV) containing alkali metal-deficient layered nickel oxide particles, with a higher level of depletion at the surface or in the outer shell regions of the particles. Further, without intending to be bound by theory, it is believed that the diffusion limited demetallation of the alkali metal-containing layered nickel oxide in step (b) efficiently removes up to about 50% of the alkali metal, and does not result in the formation of a significant amount of soluble $Ni^{2+}$ ions.

In general, the mixture of oxidant and alkali metal-containing layered nickel oxide can be heated at a temperature of about 45°C to less than about 60°C, for example, about 45°C to about 55°C, about 45°C to about 50°C, about 50°C to less than about 60°C, or about 50°C to about 55°C. In embodiments, the mixture of oxidant and alkali metal-containing layered nickel oxide can be heated at a temperature of about 50°C to less than 60°C. In embodiments, the mixture of oxidant and alkali metal-containing layered nickel oxide can be treated at a temperature of about 45°C to about 55°C. In embodiments, the mixture of oxidant and alkali metal-containing layered nickel oxide can be heated at a temperature of about 50°C to about 55°C. In embodiments, the mixture of oxidant and alkali metal-containing layered nickel oxide can be heated at a temperature of about 50°C. In embodiments, the mixture of the alkali metal-containing layered nickel oxide, oxidant, and fluid composition is prepared and then heated. In general, the dissolution of solid peroxydisulfate and monopersulfate salts is exothermic. Accordingly, in refinements of the foregoing embodiment, the components of the mixture can be admixed at ambient temperature (about 23-25°C) and, if necessary, heated at a rate of about 1°C per minute or at a rate of about 2°C per minute to the desired heating temperatures, described above.

In general, the time sufficient to form a Ni(IV) containing mixture is any time which allows at least about 25%, about 30%, about 35%, about 40%, about 45%, or about 50% of the alkali metal-containing layered nickel oxide to convert to the alpha-demetallated layered nickel oxide. Suitable reaction times can be readily determined by one having ordinary skill in the art by monitoring the percent conversion of alkali metal-containing layered nickel oxide to alpha-demetallated layered nickel oxide. In embodiments, the time sufficient to form an alpha-demetallated layered nickel oxide can depend on the temperature of the fluid composition. In embodiments, the time sufficient to form a Ni(IV) containing mixture can be about 15 minutes to about 6 hours, for example, about 15 minutes to about 6 hours, about 15 minutes to about 5 hours, about 15 minutes to about 4 hours, about 20 minutes to about 4 hours, about 20 minutes to about 3 hours, about 30 minutes to about 2 hours, about 30 minutes to about 1 hour, about 15 minutes to about 45 minutes, about 1 hour to about 5 hours, or about 2 hours to about 4 hours. Without intending to be bound by theory, in embodiments wherein the mixture of the alkali metal-containing layered nickel oxide, oxidant, and fluid composition are admixed at ambient temperatures (e.g., about 23-25°C) and heated at a rate of about 1°C to about 2°C to a temperature in the range of about 45°C to less than about 60°C, it is believed that about 30% to about 40% of the Ni(III) of the alkali metal-containing layered nickel oxide is converted to Ni(IV) within about 30 minutes. Further, without intending to be bound by theory, in embodiments wherein the heating temperature is in a range of about 45°C to less than about 60°C, it is believed that substantially all of the Ni(III) that can be oxidized to Ni(IV) by the oxidative demetallation reaction is oxidized to Ni(IV) within the first six hours and only negligible additional amounts of Ni(III) will be oxidized to Ni(IV) after six hours. In embodiments, the mixture of the alkali metal-containing layered nickel oxide and the oxidant can be heated at a temperature of about 45°C to about 55°C for about 2 to 6 hours. In embodiments, the mixture of the alkali metal-containing layered nickel oxide and the oxidant can be heated at a temperature of about 50°C to about 60°C for about 2 to 4 hours. In embodiments, the mixture of the alkali metal-containing layered nickel oxide and the oxidant can be heated at a temperature of about 50°C for about 3 hours.

Advantageously, the Ni(IV) containing mixture that results from the oxidative delithiation in step (b) is substantially free of soluble $Ni^{2+}$ ions. As used herein, and unless specified otherwise, "substantially free of soluble $Ni^{2+}$ ions" means that the Ni(IV) containing mixture contains less than 5 wt.% soluble $Ni^{2+}$ ions, less than 3 wt.% soluble $Ni^{2+}$ ions, and/or less than 1 wt.% soluble $Ni^{2+}$ ions, dissolved in the solvent of the Ni(IV) containing mixture as determined using UV-visible spectroscopy and an appropriate calibration curve. Soluble $Ni^{2+}$ ions are distinct from the $Ni^{2+}$ ions that can be included in the alkali metal sites of the crystal lattice of the alkali metal-containing layered nickel oxide and the Ni(IV) containing alkali metal-deficient layered nickel oxides. The amount of soluble $Ni^{2+}$ ions in the Ni(IV) containing mixture can be determined using UV-Visible spectroscopy utilizing the Beer-Lambert Law to estimate the concentration of the $Ni^{2+}$ ions dissolved in the solution.

In embodiments, steps (a) and (b) can optionally be repeated a second or further time prior to performing step (c). In refinements of the foregoing embodiment, an second aliquot of the fluid composition including the oxidant can be added to the Ni(IV) containing mixture of step (b) and the heating of step (b) repeated. Optionally, at least a portion of the fluid composition can be removed from the Ni(IV) containing mixture of step (b) prior to adding a second aliquot of the fluid composition including an oxidant to the Ni(IV) containing mixture of step (b) and repeating the heating of step (b). In embodiments, the Ni(IV) containing mixture of step (b) can be separated from the fluid composition and washed with water prior to adding a second aliquot of the fluid composition including an oxidant to the Ni(IV) containing mixture of step (b) and repeating the heating of step (b). Without intending to be bound by theory, it is believed that the diffusion of $Li^+$ ions from the alkali metal-containing layered nickel oxide can be inhibited by the presence of $Li^+$ ions in the fluid compositions. Accordingly, by adding additional aliquots of the fluid composition including the oxidant, the relative concentration of $Li^+$ ions in the fluid composition is decreased, facilitating additional diffusion of $Li^+$ ions out of the alkali metal-containing layered nickel oxide. Additionally, by removing at least a portion of the fluid composition before adding a second or further aliquot of the fluid composition including the oxidant, the relative concentration of $Li^+$ ions in the fluid composition can be even further reduced, facilitating additional $Li^+$ ion diffusion out of the alkali metal-containing layered nickel oxide. In embodiments wherein steps (a) and (b) are repeated, the conditions for the second and further performance of steps (a) and (b) can be the same as those disclosed supra for steps (a) and (b).

In embodiments, the method of the disclosure can be performed in a single reaction vessel. Accordingly, in embodiments, it is possible that residual, unreacted peroxydisulfate or monopersulfate can be present in the Ni(IV) containing mixture from step (b) when the mineral acid and the Ni(IV) containing mixture are added together in step (c). In embodiments wherein residual peroxydisulfate and/or monopersulfate is present when the mineral acid and the Ni(IV) containing mixture are added together, the residual peroxydisulfate and/or monopersulfate can be decomposed, resulting in oxidation of water and formation of additional sulfuric acid. In embodiments, the methods of the disclosure can be performed in one or more reaction vessels. In embodiments, the Ni(IV) containing mixture can be separated from the fluid composition and optionally washed with water prior to adding the mineral acid and the Ni(IV) containing mixture together. In general, the order of addition of the Ni(IV) containing mixture and the mineral acid is non-limiting. In embodiments, the mineral acid is added to the Ni(IV) containing mixture. In embodiments, the Ni(IV) containing mixture is added to the mineral acid.

In general, the mineral acid in step (c) can be any strong mineral acid that promotes the disproportionation reaction of the alkali metal-containing layered nickel oxide. In embodiments, the strong mineral acid comprises sulfuric acid, nitric acid, hydrochloric acid, hydrobromic acid, perchloric acid, hydroiodic acid, or a combination thereof. In embodiments, the mineral acid comprises sulfuric acid, nitric acid, hydrochloric acid, or a combination thereof. In embodiments, the mineral acid comprises sulfuric acid. Without intending to be bound by theory, it is believed that the mineral acid facilitates diffusion of the alkali metal ions from the center or core region of the nickel oxide particles by increasing the porosity (i.e., average pore size) of the nickel oxide particles. In particular, it is believed that when the $Ni^{2+}$ ions that are formed during the disproportionation of the Ni(III) dissolve out of the nickel oxide crystal lattice, the increased porosity of the nickel oxide crystal lattice can increase the rate of diffusion of the alkali metal ions out of the crystal lattice.

In general, the mineral acid can be added in any amount that allows at least about 10%, at least about 15%, at least about 20%, at least about 25%, or at least 50% of the remaining Ni(III)-containing, alkali metal-containing layered nickel oxide to convert to the alpha-demetallated layered nickel oxide. As used herein, and unless specified otherwise, the terms "Ni(IV)-containing, alkali metal-deficient layered nickel oxide," "alpha-demetallated layered nickel oxide," and "alkali-metal deficient layered nickel oxide" are used interchangeably. Suitable amounts of mineral acid can be readily determined by one having ordinary skill in the art by monitoring the percent conversion of (remaining) alkali metal-containing layered nickel oxide to the alpha-demetallated layered nickel oxide. The mineral acid facilitates acid-promoted disproportionation of the alkali metal-containing layered nickel oxide. Any unoxidized alkali metal-containing layered nickel oxide remaining subsequent to the initial reaction with the peroxydisulfate and/or monopersulfate oxidant can disproportionate into the Ni(IV) containing alkali metal-deficient layered nickel oxide and soluble $Ni^{2+}$ ions. In embodiments, about 50% of the Ni(III) in the alkali metal-containing layered nickel oxide is converted to Ni(IV) during the oxidative demetallation step (b) and about 50% of the remaining Ni(III) is converted to Ni(IV) during the acid-promoted disproportionation step (d), thereby advantageously achieving a total conversion rate of about 75%. In embodiments, the mineral acid is provided in an amount of about 0.40 to about 0.55 moles of mineral acid per mole of the total nickel in the Ni(IV) containing mixture, for example about 0.40 to about 0.55, about 0.45 to about 0.55, about 0.50 to about 0.55, about 0.40 to about 0.45, about 0.45 to about 0.50 moles of mineral acid per mole of the total nickel in the Ni(IV) containing mixture. In embodiments, the mineral acid is provided in an amount of about 0.40 to about 0.55 moles of mineral acid per mole of the total nickel in the Ni(IV) containing mixture. In embodiments, the mineral acid is provided in an amount of about 0.40 to about 0.50 moles of mineral acid per mole of the total nickel in the Ni(IV) containing mixture. In embodiments, the mineral acid is provided in an amount of about 0.45 to about 0.50 moles of mineral acid per mole of the total nickel in the Ni(IV) containing mixture.

In embodiments wherein a significant excess of peroxydisulfate and/or monopersulfate is used in the oxidative demetallation of the alkali metal-containing layered nickel oxide in step (b), reduced amounts of mineral acid can be used in step (c). In such embodiments, the amount of mineral acid in step (c) can be in a range of about 0.20 moles of mineral acid to about 0.40 moles of mineral acid per mole of the total nickel in the Ni(IV) containing mixture, for example, about 0.25 moles to about 0.35 moles, or about 0.30 moles of mineral acid per mole of the total nickel in the Ni(IV) containing mixture.

Suitable reaction times between the mineral acid and the (remaining) Ni(III)-containing, alkali metal-containing layered nickel oxide can be readily determined by one having ordinary skill in the art by monitoring the percent conversion of Ni(III)-containing, alkali metal-containing layered nickel oxide to alpha-demetallated layered nickel oxide. The percent conversion of the alkali metal-containing layered nickel oxide to alpha-demetallated layered nickel oxide can be monitored by measuring the average nickel oxidation state, measuring the amount of residual alkali metal by ICP-AES, and/or preparing an alkaline cell including the alpha-demetallated layered nickel oxide as the cathode active material and testing the capacity of the cell, using any suitable methods known in the art. In general, the time sufficient to form the additional Ni(IV) containing alkali metal-deficient layered nickel oxide electrochemically active cathode material can be about 1 hour to about 6 hours, for example, about 1 hour to about 5.5 hours, about 1 hour to about 5 hours, about 2 hours to about 4 hours, or about 3 hours. In embodiments, the time sufficient to form an additional amount of the Ni(IV) containing alkali metal-deficient layered nickel oxide electrochemically active cathode material can be about 1 hour to about 6 hours. In embodiments, the time sufficient to form an additional amount of the Ni(IV) containing alkali metal-deficient layered nickel oxide electrochemically active cathode material can be about 2 hours to about 4 hours. In embodiments, the time sufficient to form an additional amount of the Ni(IV) containing alkali metal-deficient layered nickel oxide electrochemically active cathode material can be about 3 hours. Without intending to be bound by theory, it is believed that substantially all of the remaining Ni(III) that can be oxidized to Ni(IV) during the acid-promoted disproportionation is converted to Ni(IV) within six hours and that only negligible amounts of Ni(III) will be oxidized to Ni(IV) after six hours. Further, without intending to be bound by theory, it is believed that as the time sufficient to form additional alkali metal-deficient layered nickel oxide extends beyond 6 hours, the Ni(IV) containing alpha-demetallated layered nickel oxide formed during both the oxidative demetallation step (b) and the acid-promoted disproportionation step (d) can undergo reductive dissolution to form soluble $Ni^{2+}$ species, thereby reducing the overall yield of the alpha-demetallated layered nickel oxide.

In general, the mixture of the mineral acid and the Ni(IV) containing mixture can be heated to a temperature of about 60°C to about 80°C, for example, about 60°C to about 80°C, about 60°C to about 75°C, about 60°C to about 70°C, about 65°C to about 75°C, about 68°C to about72°C, about 60°C, about 65°C, about 70°C, about 75°C, or about 80°C. Without intending to be bound by theory, it is believed that as the temperature of the Ni(IV) containing mixture undergoing acid-promoted disproportionation increases above about 70°C, the reductive dissolution of the Ni(IV) species forming soluble $Ni^{2+}$ ions increases. In embodiments, the mixture of the mineral acid and the Ni(IV) containing mixture can be heated to a temperature of about 60°C to about 70°C. In embodiments, the mixture can be heated to a temperature of about 70°C. In embodiments, the mixture of the mineral acid and the Ni(IV) containing mixture can be heated to about 60°C to about 70°C for about 2 to 4 hours. In embodiments, the mixture of the mineral acid and the Ni(IV) containing mixture can be heated to about 65°C to about 75°C for about 2 to 4 hours. In embodiments, the mixture of the mineral acid and the Ni(IV) containing mixture can be heated to about 70°C for about 3 hours.

In embodiments, after both steps (b) and (d), in combination, the alpha-demetallated layered nickel oxide electrochemically active cathode material is formed in a product yield of greater than about 50 wt.%, based on the weight of the starting alkali metal-containing layered nickel oxide, for example, in a range of greater than about 50 wt.% to about 95%, about 50 wt.% to about 90%, about 50 wt.% to about 85%, about 55% to about 80%, about 60% to about 80%, about 60% to about 75%, about 65% to about 80%, about 65% to about 75%, or about 70% to about 80%. In embodiments, after both steps (b) and (d), in combination, the alpha-demetallated layered nickel oxide electrochemically active cathode material is formed in a product yield of greater than about 55 wt.%, based on the weight of the starting alkali metal-containing layered nickel oxide. In embodiments, the alpha-demetallated layered nickel oxide electrochemically active cathode material is formed in a product yield of greater than about 60 wt.%, based on the weight of the starting alkali metal-containing layered nickel oxide. In embodiments, after both steps (b) and (d), in combination, the alpha-demetallated layered nickel oxide electrochemically active cathode material is formed in a product yield of greater than about 70 wt.%, based on the weight of the starting alkali metal-containing layered nickel oxide. In embodiments, after both steps (b) and (d), in combination, the alpha-demetallated layered nickel oxide electrochemically active cathode material is formed in a product yield of greater than about 70 wt.% to about 80 wt.%, based on the weight of the starting alkali metal-containing layered nickel oxide. In embodiments, after both steps (b) and (d), in combination, the alpha-demetallated layered nickel oxide electrochemically active cathode material is formed in a product yield of greater than about 75 wt.%, based on the weight of the starting alkali metal-containing layered nickel oxide.

In embodiments, the methods of the disclosure include (a) combining a nonstoichiometric alkali metal-containing layered nickel oxide having a formula $A_{1-a}Ni_{1+a}O_2$, wherein A comprises lithium and $0 < a \leq 0.2$ with a fluid composition comprising water and sodium peroxydisulfate salt to form a mixture, wherein the sodium peroxydisulfate salt is provided in an amount of about 0.25 to about 0.45 moles per mole of the alkali metal-containing layered nickel oxide, (b) heating the mixture for about 2 to about 4 hours at about 45°C to about 55°C to form a Ni(IV) containing mixture, the Ni(IV) containing mixture comprising a Ni(IV) containing alkali metal-deficient layered nickel oxide electrochemically active cathode material and the Ni(IV) containing mixture having a total nickel (Ni) content, (c) adding to the Ni(IV) containing mixture of step (b) a mineral acid comprising sulfuric acid, wherein the mineral acid is added in an amount of about 0.40 to about 0.55 moles per mole of total nickel, and (d) heating the mixture of step (c) for about 2 to about 4 hours at a temperature of about 65°C to about 75°C, to form an additional amount of the Ni(IV) containing alkali metal-deficient layered nickel oxide electrochemically active cathode material, wherein the Ni(IV) containing alkali metal-deficient layered nickel oxide electrochemically active cathode material formed during steps (b) and (d) has the general formula $A_xH_yNi_{1+a}O_2$, wherein A comprises an alkali metal, $0.08 \leq x < 0.2$, $0 \leq y < 0.3$, and $0.02 < a \leq 0.2$.

The method disclosed herein can further include treating an alpha-demetallated nickel oxide with an aqueous solution of an alkali metal hydroxide to form the stabilized beta-demetallated layered nickel oxide having a second, different alkali metal inserted into the layers thereof, according to the formula $A_xA'_vNi_{1+a}O_2 \cdot nH_2O$, wherein A includes Li or Na; A' includes K, Cs, or Rb; $0.04 \leq x < 0.2$; $0.03 < v < 0.20$; $0.02 < a \leq 0.2$; and $0 < n < 2$. In embodiments, the alpha-demetallated layered nickel oxide can be doped with a metal, M, such that the resulting beta-demetallated layered nickel oxide has a formula $A_xA'_vNi_{1+a-z}M_zO_2 \cdot nH_2O$, wherein A comprises Li or Na, $0 < x \leq 0.2$, A' comprises K, Cs, or Rb, $0.03 < v < 0.20$, M comprises a transition metal or main group metal, $0 \leq z \leq 0.2$, $0.02 < a \leq 0.2$, and $0 < n < 2$.

In general, A can be Li or Na. In embodiments, A comprises Li. In general, A' can be K, Rb or Cs, and A' and A are different. In embodiments, A' comprises K. In embodiments, A' comprises Rb or Cs, or a combination thereof. In embodiments, A comprises Li and A' comprises K. In embodiments, x can be in a range of 0.04 to 0.2, for example, 0.04 to 0.18, 0.04 to 0.16, 0.04 to 0.15, 0.08 to 0.2, for example, 0.08 to 0.18, 0.08 to 0.16, 0.08 to 0.15, 0.09 to 0.20, 0.09 to 0.19, 0.09 to 0.15, 0.09 to 0.12, 0.10 to 0.19, or 0.10 to 0.15. In embodiments, v can be in a range of 0.03 to 0.20, for example, 0.03 to 0.17, 0.03 to 0.15, 0.03 to 0.13, 0.06 to 0.20, 0.06 to 0.17, 0.06 to 0.15, 0.06 to 0.13, 0.08 to 0.17, 0.08 to 0.15, or 0.08 to 0.13. In embodiments, a can be in a range of $0.02 \leq a \leq 0.20$, for example 0.02 to 0.18, 0.02 to 0.16, 0.03 to 0.20, 0.03 to 0.17, 0.03 to 0.15, 0.04 to 0.20, 0.04 to 0.17, 0.04 to 0.15, 0.04 to 0.13, or 0.04 to 0.11. In embodiments, n can be in a range of $0 < n < 2$, for example, about 0.01 to about 1.9, about 0.02 to about 1.8, about 0.05 to about 1.8, about 0.05 to about 1.5, about 0.05 to about 1.25, about 0.05 to about 1.0, about 0.1 to about 1.8, about 0.1 to about 1.5, about 0.1 to about 1.25, about 0.1 to about 1.0, about 0.15 to about 1.8, about 0.15 to about 1.5, about 0.15 to about 1.25, about 0.15 to about 1, about 0.15 to about 0.8, about 0.15 to about 0.75, about 0.15 to about 0.7, or about 0.15 to about 0.6. In embodiments, z can have a value in a range of $0 \leq z \leq 0.2$ or $0 < z \leq 0.2$, for example, 0 to 0.20, 0.01 to 0.20, 0.01 to 0.18, 0.01 to 0.16, 0.01 to 0.15, 0.02 to 0.20, 0.02 to 0.18, 0.02 to 0.16, 0.02 to 0.15, 0.03 to 0.20, 0.03 to 0.19, 0.03 to 0.15, 0.03 to 0.12, 0.05 to 0.19, or 0.05 to 0.15.

The aqueous solution of an alkali hydroxide is not particularly limited and can be selected from a potassium salt solution, a rubidium salt solution, a cesium salt solution, or any combination thereof. The concentration of alkali metal salt in the alkaline solution can be any concentration sufficient to achieve substantially complete conversion of the alpha-demetallated layered nickel oxide to the beta-demetallated layered nickel oxide. As used herein, and unless specified otherwise, "substantially complete conversion" refers to conversion of the alpha-demetallated layered nickel oxide to the beta-demetallated layered nickel oxide wherein residual alpha-demetallated layered nickel oxide is present in an amount of 5 wt.% or less, based on the total weight of the nickel oxide materials. In some embodiments, the concentration of alkali metal hydroxide in the solution can be in a range of about 0.5M to about 10M, about 1M to about 10M, about 3M to about 9M, or about 5M to about 8.75M. In some embodiments, the alkali metal hydroxide solution includes at least one of potassium hydroxide, cesium hydroxide, and rubidium hydroxide, or a combination thereof, provided at a concentration of about 0.5M to about 10M. The alpha-demetallated layered nickel oxide can be provided as a free-flowing powder when combined with the alkali metal hydroxide solution. The alpha-demetallated layered nickel oxide powder and alkali metal hydroxide solution can be combined in a weight ratio of about 10:1 to about 1:5, about 9:1 to about 1:4, about 8:1 to about 1:3, about 7:1 to about 1:2, about 6:1 to about 1:2, about 5:1 to about 1:2, or about 4:1 to about 1:2, or about 3:1 to about 1:1, for example, about 3:1, about 2:1, or about 1:1.

The alpha-demetallated layered nickel oxide can be treated with the alkali metal hydroxide solution for a period of time sufficient to ensure that the alpha-demetallated layered nickel oxide is fully converted to the beta-demetallated layered nickel oxide. The alpha-demetallated layered nickel oxide and alkali metal hydroxide solution can be agitated initially for 5 to 15 minutes at ambient temperature to ensure adequate mixing and wetting. Following mixing of the alpha-demetallated layered nickel oxide and the alkali metal hydroxide solution, the mixture is held at ambient temperature for 2 to 24 hours. Optionally, the mixture can be stirred during the 2 to 24 hour period. After the 2 to 24 hours, the resulting beta-demetallated layered nickel oxide can optionally be washed with water to remove any residual alkali metal hydroxide. Substantially complete conversion to the beta-demetallated layered nickel oxide can be confirmed by analyzing the powder X-ray diffraction pattern of the resulting material. For example, the alpha-delithiated layered nickel oxide has a characteristic powder X-ray diffraction pattern different from that of the beta-delithiated layered nickel oxide. For alpha-delithiated layered nickel oxide treated with a potassium hydroxide solution, as the potassium ion and water molecules from the potassium hydroxide solution insert into layers of the alpha-delithiated layered nickel oxide, the intensity of a diffraction peak located at about 18° to 20°2θ in the X-ray diffraction pattern of the alpha-delithiated layered nickel oxide decreases and very broad peaks appear in the X-ray diffraction pattern of the beta-delithiated layered nickel oxide at about 14.9° to about 16.0°2θ, and about 21.3° to about 22.7° 2θ. Thus, at full conversion to the beta-delithiated layered nickel oxide, the powder X-ray diffraction pattern will have broad diffraction peaks at about 10.8° to about 12.0°2θ, about 14.9° to about 16.0°2θ, and about 21.3° to about 22.7° 2θ having greater intensities than in the powder X-ray diffraction pattern of the alpha-delithiated layered nickel oxide precursor, and there will be no diffraction peak having significant intensity in the range of about 18° to 20° 2θ. The resulting beta-demetallated layered nickel oxide can be washed repeatedly with deionized water until the pH of the filtrate from washing is about 10. The solid powder can be collected and dried in air at about 70°C for a period of about 12 to 20 hours.

In embodiments, treating the alpha-demetallated layered nickel oxide with an aqueous solution of an alkali metal hydroxide, wherein the alkali metal is different from that of the alpha-demetallated layered nickel oxide, forms less than about 10%, by weight, of gamma-nickel oxyhydroxide (γ-NiOOH) as a side product, based on the total weight of the reaction products, for example, less than about 8%, less than about 6%, less than about 5%, less than about 4%, less than about 3%, less than about 2%, or less than about 1%, based on the total weight of the solid reaction products. In embodiments, treating the alpha-demetallated layered nickel oxide with an aqueous solution of an alkali metal hydroxide can form less than about 6% by weight of gamma-nickel oxyhydroxide (γ-NiOOH) as a reaction side product.

Advantageously, the method of the disclosure provide alpha-demetallated layered nickel oxides having relatively larger particle sizes than current methods which, in turn, can be used to prepare beta-demetallated layered nickel oxides having relatively larger particle sizes than beta-demetallated layered nickel oxide particles formed from alpha-demetallated layered nickel oxides using conventional methods. Without intending to be bound by theory, it is believed that the particle size of the layered nickel oxide material does not substantially change between the alpha and the beta forms. As used herein and unless specified otherwise, a particle size does not "substantially change" between the alpha and the beta forms if the average particle size of the beta-demetallated layered nickel oxide is within about 10% of the average particle size of the alpha-demetallated layered nickel oxide. Without intending to be bound by theory, it is believed that the performance of a battery including the beta-demetallated layered nickel oxide can decrease as the particle size of the beta-demetallated layered nickel oxide decreases. In particular, without intending to be bound by theory, it is believed that under the conditions of a closed battery, the beta-demetallated layered nickel oxide can be subject to a reaction with conductive carbon particles in the cathode and the electrolyte, which can result in the high-rate discharge performance of the cell to be less than expected. However, as the particle size of the beta-demetallated layered nickel oxide increases, the surface area of the beta-demetallated layered nickel oxide decreases overall, reducing the number of potential points of contact with the carbon particles, and reducing the likelihood of an oxidative reaction between the carbon particles and the beta-demetallated layered nickel oxide particles. Oxidation of the surface of the carbon particles can decrease their conductivity resulting in an increase in cathode resistance, thereby decreasing high-rate performance of the cell.

## BATTERIES

Electrochemical cells, or batteries, may be primary or secondary. Primary batteries are meant to be discharged, e.g., to exhaustion, only once and then discarded. Primary batteries are described, for example, in David Linden, Handbook of Batteries (4th ed. 2011). Secondary batteries are intended to be recharged. Secondary batteries may be discharged and recharged many times, e.g., more than fifty times, a hundred times, or more. Secondary batteries are described, for example, in David Linden, Handbook of Batteries (4th ed. 2011). Accordingly, batteries may include various electrochemical couples and electrolyte combinations. Although the description and examples provided herein are generally directed towards primary alkaline electrochemical cells, or batteries, it should be appreciated that the invention applies to both primary and secondary batteries having aqueous, nonaqueous, ionic liquid, and solid state electrolyte systems. Primary and secondary batteries including the aforementioned electrolytes are thus within the scope of this application and the invention is not limited to any particular embodiment.

Referring to Figure 1, there is shown a primary alkaline electrochemical cell, or battery, 10 including a cathode 12, an anode 14, a separator 16, and a housing 18. Battery 10 also includes a current collector 20, a seal 22, and an end cap 24. The end cap 24 serves as the negative terminal of the battery 10. A positive pip 26 is at the opposite end of the battery 10 from the end cap 24. The positive pip 26 may serve as the positive terminal of the battery 10. An electrolytic solution is dispersed throughout the battery 10. The cathode 12, anode 14, separator 16, electrolyte, current collector 20, and seal 22 are contained within the housing 18. Battery 10 can be, for example, a AA, AAA, AAAA, C, or D size alkaline battery.

The housing 18 can be of any conventional type of housing commonly used in primary alkaline batteries and can be made of any suitable base material, for example cold-rolled steel or nickel-plated cold-rolled steel. The housing 18 may have a cylindrical shape. The housing 18 may be of any other suitable, non-cylindrical shape. The housing 18, for example, may have a shape comprising at least two parallel plates, such as a rectangular, square, or prismatic shape. The housing 18 may be, for example, deep-drawn from a sheet of the base material, such as cold-rolled steel or nickel-plated steel. The housing 18 may be, for example, drawn into a cylindrical shape. The housing 18 may have at least one open end. The housing 18 may have a closed end and an open end with a sidewall therebetween. The interior surface of the sidewall of the housing 18 may be treated with a material that provides a low electrical-contact resistance between the interior surface of the sidewall of the housing 18 and an electrode, such as the cathode 12. The interior surface of the sidewall of the housing 18 may be plated, e.g., with nickel, cobalt, and/or painted with a carbon-loaded paint to decrease contact resistance between, for example, the internal surface of the sidewall of the housing 18 and the cathode 12.

The cathode 12 includes at least one electrochemically active cathode material. The electrochemically active cathode material can include an alpha-demetallated layered nickel oxide and/or a non-stoichiometric beta-delithiated layered nickel oxide prepared according to methods of the disclosure. In embodiments, when a non-stoichiometric beta-delithiated layered nickel oxide is provided as an electrochemically active cathode material, the non-stoichiometric beta-delithiated layered nickel oxide comprises less than 5 wt.%, less than 3 wt%, less than 1 wt%, or less than 0.5 wt% residual non-stoichiometric alpha-delithiated layered nickel oxide, based on the total weight of the delithiated layered nickel oxide electrochemically active cathode material. Further, the non-stoichiometric beta-delithiated layered nickel oxide can comprise less than about 10 wt%, less than about 8 wt%, less than about 6 wt%, less than about 4 wt%, less than about 3 wt%, less than about 2 wt%, and/or less than about 1 wt% of gamma-nickel oxyhydroxide (as a side product) based on the total weight of the delithiated layered nickel oxide electrochemically active cathode material. Similarly, a cell that includes a non-stoichiometric beta-delithiated layered nickel oxide, as described herein, is provided with the non-stoichiometric beta-delithiated layered nickel oxide ab initio.

The cathode 12 may also include at least one or more additional electrochemically active cathode materials. The additional electrochemically active cathode material may include manganese oxide, manganese dioxide, electrolytic manganese dioxide (EMD), chemical manganese dioxide (CMD), high power electrolytic manganese dioxide (HP EMD), lambda manganese dioxide, gamma manganese dioxide, ramsdellite, and any combination thereof. Other electrochemically active cathode materials include, but are not limited to, silver oxide; nickel oxide, nickel oxyhydroxide; copper oxide; silver copper oxide; silver nickel oxide; bismuth oxide; silver bismuth oxide; oxygen; and any combination thereof. The nickel oxyhydroxide can include beta-nickel oxyhydroxide, gamma-nickel oxyhydroxide, intergrowths of beta-nickel oxyhydroxide and/or gamma-nickel oxyhydroxide, and cobalt oxyhydroxide-coated beta-nickel oxyhydroxide. The cobalt oxyhydroxide-coated nickel oxyhydroxide can include cobalt oxyhydroxide-coated beta-nickel oxyhydroxide, cobalt oxyhydroxide-coated gamma-nickel oxyhydroxide, and/or cobalt oxyhydroxide-coated intergrowths of beta-nickel oxyhydroxide and gamma-nickel oxyhydroxide.

In embodiments, the electrochemically active material of cathode 12 comprises at least 5 wt.%, at least 10 wt.%, at least 15 wt.%, at least 20 wt.%, at least 25 wt.%, at least 30 wt.%, at least 35 wt.%, at least 40 wt.%, at least 45 wt.%, at least 50 wt.%. at least 55 wt.%, at least 60 wt.%, at least about 70 wt.%, or at least about 75 wt.%, of the non-stoichiometric beta-delithiated layered nickel oxide, based on the total weight of the electrochemically active cathode material, for example, in a range of about 5 wt.% to about 95 wt.%, about 10 wt.% to about 90 wt.%, about 10 wt.% to about 80 wt.%, about 20 wt.% to about 70 wt.%, about 30 wt.% to about 60 wt.%, about 40 wt.% to about 60 wt.%, or about 50 wt.%, based on the total weight of the electrochemically active cathode material. In embodiments, the electrochemically active material of cathode 12 comprises about 40 wt.% to about 60 wt.% of the non-stoichiometric beta-delithiated nickel oxide, based on the total weight of the electrochemically active cathode material and about 60 wt.% to about 40 wt.% of one or more of manganese oxide, manganese dioxide, electrolytic manganese dioxide (EMD), chemical manganese dioxide (CMD), high power electrolytic manganese dioxide (HP EMD), lambda manganese dioxide, or gamma manganese dioxide, based on the total weight of the electrochemically active cathode material. A combination of between about 5 wt.% and about 60 wt.% or between about 10 wt.% and about 60 wt.%, for example, 10 wt.%, 20 wt.%, 30 wt.%, 40 wt.% or 50 wt.%, of the non-stoichiometric beta-delithiated layered nickel oxide with the balance of the electrochemically active cathode material comprising electrolytic manganese dioxide (EMD) has been found to provide unexpectedly advantageous battery performance in both high-rate discharge applications and low-rate discharge applications.

The cathode 12 may include a conductive additive, such as carbon, and optionally, a binder. The cathode 12 may also include other additives. The carbon may increase the conductivity of the cathode 12 by facilitating electron transport within the solid structure of the cathode 12. The carbon may be graphite, such as natural graphite, synthetic graphite, oxidation resistant graphite, graphene, single-walled carbon nanotubes, multi-walled carbon nanotubes, carbon fibers, carbon nanofibers, carbon nanoribbons, carbon nanoplatelets, and mixtures thereof. It is preferred that the amount of carbon in the cathode is relatively low, e.g., less than about 12%, less than about 10%, less than about 9%, less than about 8%, less than about 6%, less than about 5% less than about 3.75%, or even less than about 3.5%, for example from about 3.0% to about 5% by weight or from about 2.0% to about 3.5% by weight. The lower carbon level can enable inclusion of a higher loading of electrochemically active cathode material within the cathode 12 without increasing the volume of the cathode 12 or reducing the void volume. Suitable graphite for use within a battery, e.g., within the cathode, may be, for example, Timrex MX-15, SFG-15, MX-25, all available from Imerys Graphite and Carbon (Bodio, Switzerland). In the case of a highly reactive cathode active material such as non-stoichiometric beta-delithiated layered nickel oxide, an oxidation-resistant graphite, for example, SFG-15, SFG-10, and SFG-6, can be used.

The cathode 12 can include an optional binder. As used herein, "binder" refers to a polymeric material that provides cathode cohesion and does not encompass graphite. Examples of optional binders that may be used in the cathode 12 include polyethylene, polyacrylic acid, or a fluorocarbon resin, such as PVDF or PTFE. An optional binder for use within the cathode 12 may be, for example, COATHYLENE HA-1681, available from E. I. du Pont de Nemours and Company (Wilmington, DE, USA). Examples of other cathode additives are described in, for example, U.S. Patent Nos. 5,698,315, 5,919,598, 5,997,775 and 7,351,499. In some embodiments, the cathode 12 is substantially free of a binder. As used herein, "substantially free of a binder" means that the cathode includes less than about 5 wt.%, less than about 3 wt.%, or less than about 1 wt.% of a binder.

The content of electrochemically active cathode material within the cathode 12 may be referred to as the cathode loading. The loading of the cathode 12 may vary depending upon the electrochemically active cathode material used within, and the size of, the battery 10. For example, a AA battery with a beta-delithiated layered nickel oxide as the electrochemically active cathode material may have a cathode loading of at least about 6 grams of beta-delithiated layered nickel oxide. The cathode loading may be, for example, at least about 7 grams of non-stoichiometric beta-delithiated layered nickel oxide. The cathode loading may be, for example, between about 7.2 grams to about 11.5 grams of nonstoichiometric beta-delithiated layered nickel oxide. The cathode loading may be from about 8 grams to about 10 grams of non-stoichiometric beta-delithiated layered nickel oxide. The cathode loading may be from about 8.5 grams to about 9.5 grams of non-stoichiometric beta-delithiated layered nickel oxide. The cathode loading may be from about 9.5 grams to about 11.5 grams of non-stoichiometric beta-delithiated layered nickel oxide. The cathode loading may be from about 10.4 grams to about 11.5 grams of non-stoichiometric beta-delithiated layered nickel oxide. For a AAA battery, the cathode loading may be at least about 3 grams of non-stoichiometric beta-delithiated layered nickel oxide electrochemically active cathode material. The cathode loading may be from about 3 grams to about 5 grams of non-stoichiometric beta-delithiated layered nickel oxide. The cathode loading may be from about 3.5 grams to about 4.5 grams of non-stoichiometric beta-delithiated layered nickel oxide. The cathode loading may be from about 3.9 grams to about 4.3 grams of nonstoichiometric beta-delithiated layered nickel oxide. For a AAAA battery, the cathode loading may be from about 1.5 grams to about 2.5 grams of non-stoichiometric beta-delithiated layered nickel oxide electrochemically active cathode material. For a C battery, the cathode loading may be from about 27.0 grams to about 40.0 grams, for example about 33.5 grams, of non-stoichiometric beta-delithiated layered nickel oxide electrochemically active cathode material. For a D battery, the cathode loading may be from about 60.0 grams to about 84.0 grams, for example about 72.0 grams, of non-stoichiometric beta-delithiated layered nickel oxide electrochemically active cathode material.

The cathode components, such as active cathode material(s), carbon particles, binder, and any other additives, may be combined with a liquid, such as an aqueous potassium hydroxide electrolyte, blended, and pressed into pellets for use in the assembly of the battery 10. For optimal cathode pellet processing, it is generally preferred that the cathode pellet have a moisture level in the range of about 2% to about 5% by weight, or about 2.8% to about 4.6% by weight. The pellets, are placed within the housing 18 during the assembly of the battery 10, and are typically re-compacted to form a uniform cathode assembly within the housing 18. The cathode pellet may have a cylindrical shape that includes a central bore. The size of the pellet may vary by the size of the battery, for example AA size, AAA size, AAAA size, C size, and D size, that the pellet will be used within. The central bore may define an inside diameter (ID) of the pellet. The inside diameter of the pellet for a AA battery may be, for example, from about 9.1 mm to about 9.9 mm. The inside diameter of the pellet for a AA battery may be, for example, from about 9.3 mm to about 9.7 mm. The inside diameter of the pellet for a AAA battery may be, for example, from about 6.6 mm to about 7.2 mm. The inside diameter of the pellet for a AAA battery may be, for example, from about 6.7 mm to about 7.1 mm. The inside diameter of the pellet for a AAAA battery may be, for example, from about 5 mm to about 5.5 mm. The inside diameter of the pellet for a C battery may be, for example, from about 16 mm to about 19 mm. The inside diameter of the pellet for a D battery may be, for example, from about 21 mm to about 25 mm.

The cathode 12 will have a porosity that may be calculated at the time of cathode manufacture. The porosity of the cathode 12 may be from about 20% to about 40%, between about 22% and about 35%, and, for example, about 26%. The porosity of the cathode 12 may be calculated at the time of manufacturing, for example after cathode pellet processing, since the porosity of the cathode 12 within the battery 10 may change over time due to, inter alia, cathode swelling associated with electrolyte wetting of the cathode and discharge of the battery 10. The porosity of the cathode 12 may be calculated as follows. The true density of each solid cathode component may be taken from a reference book, for example Lange's Handbook of Chemistry (16th ed. 2005). The solids weight of each of the cathode components are defined by the battery design. The solids weight of each cathode component may be divided by the true density of each cathode component to determine the cathode solids volume. The volume occupied by the cathode 12 within the battery 10 is defined, again, by the battery design. The volume occupied by the cathode 12 may be calculated by a computer-aided design (CAD) program. The porosity may be determined by the following formula:

$$\text{Cathode Porosity} = [1 - (\text{cathode solids volume} \div \text{cathode volume})] \times 100$$

For example, the cathode 12 of a AA battery may include about 9.0 grams of nonstoichiometric beta-delithiated layered nickel oxide and about 0.90 grams of graphite (BNC-30) as solids within the cathode 12. The true densities of the non-stoichiometric beta-delithiated layered nickel oxide and graphite may be, respectively, about 4.9 g/cm3 and about 2.15 g/cm3. Dividing the weight of the solids by the respective true densities yields a volume occupied by the non-stoichiometric beta-delithiated layered nickel oxide of about 1.8 cm3 and a volume occupied by the graphite of about 0.42 cm3. The total solids volume is about 2.2 cm3. The battery designer may select the volume occupied by the cathode 12 to be about 3.06 cm3. Calculating the cathode porosity per the equation above [1-(2.2 cm3 ÷ 3.06 cm3)] yields a cathode porosity of about 0.28, or 28%.

The anode 14 can be formed of at least one electrochemically active anode material, a gelling agent, and minor amounts of additives, such as organic and/or inorganic gassing inhibitor. The electrochemically active anode material may include zinc; zinc oxide; zinc hydroxide; metal hydride, such as AB5(H), AB2(H), and A2B7(H); alloys thereof; and any combination thereof.

The content of electrochemically active anode material within the anode 14 may be referred to as the anode loading. The loading of the anode 14 may vary depending upon the electrochemically active anode material used within, and the size of, the battery. For example, a AA battery with a zinc electrochemically active anode material may have an anode loading of at least about 3.3 grams of zinc. The anode loading may be, for example, at least about 3.5 grams, about 3.7 grams, about 3.9 grams, about 4.1 grams, about 4.3 grams, or about 4.5 grams of zinc. The anode loading may be from about 4.0 grams to about 5.5 grams of zinc. The anode loading may be from about 4.2 grams to about 5.3 grams of zinc. For example, a AAA battery with a zinc electrochemically active anode material may have an anode loading of at least about 1.8 grams of zinc. For example, the anode loading may be from about 1.8 grams to about 2.5 grams of zinc. The anode loading may be, for example, from about 1.9 grams to about 2.4 grams of zinc. For example, a AAAA battery with a zinc electrochemically active anode material may have an anode loading of at least about 0.6 grams of zinc. For example, the anode loading may be from about 0.7 grams to about 1.3 grams of zinc. For example, a C battery with a zinc electrochemically active anode material may have an anode loading of at least about 9.3 grams of zinc. For example, the anode loading may be from about 10.0 grams to about 19.0 grams of zinc. For example, a D battery with a zinc electrochemically active anode material may have an anode loading of at least about 30.0 grams of zinc. For example, the anode loading may be from about 30.0 grams to about 45.0 grams of zinc. The anode loading may be, for example, from about 33.0 grams to about 39.5 grams of zinc.

Examples of a gelling agent that may be used within the anode 14 include a polyacrylic acid; a polyacrylic acid cross-linked with polyalkenyl ether of divinyl glycol; a grafted starch material; a salt of a polyacrylic acid; a carboxymethylcellulose; a salt of a carboxymethylcellulose (e.g., sodium carboxymethylcellulose); or combinations thereof. The anode 14 may include a gassing inhibitor that may include an inorganic material, such as bismuth, tin, or indium. Alternatively, the gassing inhibitor can include an organic compound, such as a phosphate ester, an ionic surfactant or a nonionic surfactant. The electrolyte may be dispersed throughout the cathode 12, the anode 14, and the separator 16. The electrolyte comprises an ionically conductive component in an aqueous solution. The ionically conductive component may be an alkali hydroxide. The alkali hydroxide may be, for example, potassium hydroxide, sodium hydroxide, lithium hydroxide, cesium hydroxide, and any combination thereof. The concentration of the ionically conductive component may be selected depending on the battery design and its desired performance. The concentration of the alkali hydroxide within the electrolyte may be from about 0.20 to about 0.40, or from about 20% to about 40%, on a weight basis of the total electrolyte within the battery 10. For example, the hydroxide concentration of the electrolyte may be from about 0.25 to about 0.32, or from about 25% to about 32%, on a weight basis of the total electrolyte within the battery 10. The aqueous alkaline electrolyte may also include zinc oxide (ZnO). The ZnO may serve to suppress zinc corrosion within the anode. The concentration of ZnO included within the electrolyte may be less than about 5% by weight of the total electrolyte within the battery 10. The ZnO concentration, for example, may be from about 1% by weight to about 3% by weight of the total electrolyte within the battery 10.

The total weight of the aqueous alkaline electrolyte within a AA alkaline battery, for example, may be from about 3.0 grams to about 4.4 grams. The total weight of the alkaline electrolyte within a AA battery may be, for example, from about 3.3 grams to about 3.8 grams. The total weight of the alkaline electrolyte within a AA battery may be, for example, from about 3.4 grams to about 3.65 grams. The total weight of the aqueous alkaline electrolyte within a AAA alkaline battery, for example, may be from about 1.0 grams to about 2.0 grams. The total weight of the electrolyte within a AAA battery may be, for example, from about 1.2 grams to about 1.8 grams. The total weight of the electrolyte within a AAA battery may be, for example, from about 1.4 grams to about 1.8 grams. The total weight of the electrolyte within a AAAA battery may be from about 0.68 grams to about 1 gram, for example, from about 0.85 grams to about 0.95 grams. The total weight of the electrolyte within a C battery may be from about 11 grams to about 14 grams, for example, from about 12.6 grams to about 13.6 grams. The total weight of the electrolyte within a D battery may be from about 22 grams to about 30 grams, for example, from about 24 grams to about 29 grams.

The separator 16 comprises a material that is wettable or wetted by the electrolyte. A material is said to be wetted by a liquid when the contact angle between the liquid and the surface of the material is less than 90° or when the liquid tends to spread spontaneously across the surface of the material; both conditions normally coexist. The separator 16 may comprise a single layer, or multiple layers, of woven or nonwoven paper or fabric. The separator 16 may include a layer of, for example, cellophane combined with a layer of nonwoven material. The separator 16 also can include an additional layer of non-woven material. The separator 16 may also be formed in situ within the battery 10. U.S. Patent 6,514,637, for example, discloses such separator materials, and potentially suitable methods of their application. The separator material may be thin. The separator 16, for example, may have a dry material thickness of less than 250 micrometers (microns). The separator 16 may have a dry material thickness from about 50 microns to about 175 microns. The separator 16 may have a dry material thickness from about 70 microns to about 160 microns. The separator 16 may have a basis weight of about 40 g/m2 or 20 less. The separator 16 may have a basis weight from about 15 g/m2 to about 40 g/m2. The separator 16 may have a basis weight from about 20 g/m2 to about 30 g/m2. The separator 16 may have an air permeability value. The separator 16 may have an air permeability value as defined in International Organization for Standardization (ISO) Standard 2965. The air permeability value of the separator 16 may be from about 2000 cm3/cm2•min @ 1kPa to about 5000 cm3/cm2•min @ 1kPa. The air permeability value of the separator 16 may be from about 3000 cm3/cm2•min @ 1kPa to about 4000 cm3/cm2•min @ 1kPa. The air permeability value of the separator 16 may be from about 3500 cm3/cm2•min @ 1kPa to about 3800 cm3/cm2•min @ 1kPa.

The current collector 20 may be made into any suitable shape for the particular battery design by any known methods within the art. The current collector 20 may have, for example, a nail-like shape. The current collector 20 may have a columnar body and a head located at one end of the columnar body. The current collector 20 may be made of metal, e.g., zinc, copper, brass, silver, or any other suitable material. The current collector 20 may be optionally plated with tin, zinc, bismuth, indium, or another suitable material presenting a low electrical-contact resistance between the current collector 20 and, for example, the anode 14. The plating material may also exhibit an ability to suppress gas formation when the current collector 20 is contacted by the anode 14.

The seal 22 may be prepared by injection molding a polymer, such as polyamide, polypropylene, polyetherurethane, or the like; a polymer composite; and any combination thereof into a shape with predetermined dimensions. The seal 22 may be made from, for example, Nylon 6,6; Nylon 6,10; Nylon 6,12; Nylon 11; polypropylene; polyetherurethane; co-polymers; composites; and any combination thereof. Exemplary injection molding methods include both the cold runner method and the hot runner method. The seal 22 may contain other known functional materials such as a plasticizer, a crystalline nucleating agent, an antioxidant, a mold release agent, a lubricant, and an antistatic agent. The seal 22 may also be coated with a sealant. The seal 22 may be moisturized prior to use within the battery 10. The seal 22, for example, may have a moisture content of from about 1.0 weight percent to about 9.0 weight percent depending upon the seal material. The current collector 20 may be inserted into and through the seal 22.

The end cap 24 may be formed in any shape sufficient to close the battery. The end cap 24 may have, for example, a cylindrical or prismatic shape. The end cap 24 may be formed by pressing a material into the desired shape with suitable dimensions. The end cap 24 may be made from any suitable material that will conduct electrons during the discharge of the battery 10. The end cap 24 may be made from, for example, nickel-plated steel or tinplated steel. The end cap 24 may be electrically connected to the current collector 20. The end cap 24 may, for example, make electrical connection to the current collector 20 by being welded to the current collector 20. The end cap 24 may also include one or more apertures, such as holes, for venting any gas pressure due to electrolyte leakage or venting of the battery due to buildup of excessive internal pressure. The current collector 20, the seal 22, and the end cap 24 may be collectively referred to as the end cap assembly.

## Examples

**Example 1.** Preparation of alpha-delithiated layered nickel oxide via sequential treatment of non-stoichiometric layered lithium nickel oxide with sodium peroxydisulfate and sulfuric acid.

To deionized water in a 1 liter glass reactor fitted with a heating mantle, nonstoichiometric layered lithium nickel oxide (LNO) having an excess of nickel ($Li_{1-a}Ni_{1+a}O_2$, $0.02 \leq a \leq 0.2$) that had been ground and passed through a 20 mesh (U.S. Standard) sieve was added with rapid stirring to form a suspension. To the stirred suspension of LNO, solid sodium peroxydisulfate (i.e., $Na_2S_2O_8$, or "SPS") was added such that the amount of persulfate added relative to LNO was 0.35 moles of persulfate per mole of LNO. The initial pH of the mixture was 9-12. The stirred mixture was heated at a rate of about 1°C/min to 50°C. After stirring the mixture at 50°C for 3 hours, about 50% of the lithium had been removed from the LNO and less than 3 wt% of soluble $Ni^{2+}$ ions detected in solution, using UV-visible spectroscopy and an appropriate concentration calibration curve. Without cooling the resulting mixture, sulfuric acid was added with stirring in an amount of from 0.40 to 0.50 moles of acid per mole of total nickel and the mixture heated at a rate of about 1°C/min to 60°C, followed by continued stirring at 60°C for 3 hours. Stirring was stopped and the solid product allowed to settle. The supernatant solution was decanted while still warm. The resulting solid alpha-delithiated layered nickel oxide product was washed with deionized water. After washing, the solid product was again allowed to settle and the clear supernatant decanted. The washing process was repeated to remove soluble $Ni^{2+}$ complexes, soluble nickel and lithium sulfates, and residual sulfuric acid. The solid product was collected by vacuum filtration and dried at 60-80°C in air for at about 12 hours. Yield of the dried alpha-delithiated layered nickel oxide product was about 70% by weight. The mean primary particle size (i.e., $D_{50}$) of the alpha-delithiated layered nickel oxide product was about 5.3 microns. This represented about a 16% reduction in mean primary particle size compared to that of the precursor layered lithium nickel oxide. The resulting dried material was provided as the cathode active material in a 635 type alkaline button cell, which demonstrated a low-rate (e.g., 10 mA/g, ~C/40) discharge capacity in the range of 360 to 411 mAh/g. The product yields of alpha-delithiated layered nickel oxides, the amount of residual lithium in the crystal lattice, and the discharge capacities re provided in Table 1, below, for various sulfuric acid:LNO molar ratios.

The dried alpha-delithiated layered nickel oxide was treated with an 8.7M aqueous potassium hydroxide solution including 0.069 g of potassium hydroxide per gram of the alpha-delithiated layered nickel oxide. The mixture was sealed in a polyethylene bottle and held at room temperature for 12-24 hours to form the beta-delithiated layered nickel oxide. The semi-solid mixture was washed with multiple aliquots of deionized water to remove unreacted KOH. The washed beta-delithiated layered nickel oxide product was dried at 70°C in air for about 12 hours.

Table 1:

| SPS:LNO molar ratio | Acid:LNO molar ratio | Yield of alpha-delithiated layered nickel oxide (%) | Li% in alpha-delithiated layered nickel oxide (%) | Capacity of alpha-delithiated nickel oxide (mAh/g) |
|---|---|---|---|---|
| 0.35 | 0.40 | 70 | 1.42 | 363 |
| 0.35 | 0.45 | 70 | 0.95 | 397 |
| 0.35 | 0.50 | 69 | 0.636 | 411 |

Thus, Example 1 demonstrates that when the sulfuric acid is reacted with the Ni(IV) containing mixture at 60°C, varying the acid to LNO molar ratio in a range of 0.40 to 0.50 moles of acid per mole of total nickel content does not have a large effect on yield of alpha-delithiated layered nickel oxide, but does have a moderate (<15%) effect on the discharge capacity Example 1 further demonstrates that, under the conditions of Example 1, it is possible to increase the discharge capacity of the alpha-delithiated layered nickel oxide while maintaining the product yield.

**Example 2.** Preparation of alpha-delithiated layered nickel oxide via treatment of nonstoichiometric layered lithium nickel oxide with sodium peroxydisulfate and sulfuric acid.

To deionized water in a 1 liter glass reactor fitted with a heating mantle, nonstoichiometric layered lithium nickel oxide (LNO) having an excess of nickel ($Li_{1-a}Ni_{1+a}O_2$, $0.02 \leq a \leq 0.2$) that had been ground and passed through a 20 mesh (U.S. Standard) sieve was added with stirring to form a suspension. To the stirred suspension of LNO, solid sodium peroxydisulfate (i.e., $Na_2S_2O_8$, SPS) was added such that the amount of persulfate added relative to LNO was 0.35 moles of persulfate per mole of LNO. The initial pH of the mixture was 9-12. The stirred mixture was heated at a rate of about 1°C/min to 50°C. After stirring the mixture at 50°C for 3 hours, about 50% of the lithium had been removed from the LNO and less than 3 wt% soluble $Ni^{2+}$ detected in solution. Without cooling the resulting mixture, sulfuric acid was added with stirring in an amount of 0.43 to 0.53 moles of acid per mole of total nickel and the mixture was heated at a rate of about 1°C/min to 70°C, followed by continued stirring at 70°C for 3 hours. Stirring was stopped and the solid product allowed to settle. The supernatant solution was decanted while still warm. The resulting solid alpha-delithiated layered nickel oxide product was washed with deionized water. After washing, the solid product was allowed to settle again and the clear supernatant decanted. The washing process was repeated to remove soluble $Ni^{2+}$ complexes, soluble nickel and lithium sulfates, and residual sulfuric acid. The solid product was collected by vacuum filtration and dried at 60-80°C in air for at about 12 hours. Yield of dried product was about 60-70%. The mean primary particle size (i.e., $D_{50}$) of the alpha-delithiated layered nickel oxide product was about 5.5 microns. This represented about a 14% reduction in mean primary particle size compared to that of the precursor layered lithium nickel oxide. The resulting dried material was provided as the cathode active material in a 635 type alkaline button cell, which demonstrated a low-rate (e.g., 10 mA/g, ~C/40) discharge capacity in a range of about 400-about 430 mAh/g. The product yields of the alpha-delithiated layered nickel oxides, the amounts of residual lithium in the crystal lattice, and discharge capacities are provided in Table 2, below, for the various sulfuric acid:LNO molar ratios.

The dried alpha-delithiated layered nickel oxide was thoroughly mixed with an 8.7M aqueous potassium hydroxide solution to form a semi-solid mixture including 0.069 g of potassium hydroxide per gram of the alpha-delithiated layered nickel oxide material. The mixture was sealed in a polyethylene bottle and held at room temperature for 12-24 hours to form the beta-delithiated layered nickel oxide. The semi-solid mixture was washed with multiple aliquots of deionized water to remove unreacted KOH. The washed beta-delithiated layered nickel oxide product was dried at 70°C in air for about 12 hours.

Table 2:

| SPS:LNO molar ratio | Acid:LNO molar ratio | Yield of alpha-delithiated layered nickel oxide (%) | Li% in alpha-delithiated layered nickel oxide (%) | Capacity of alpha-delithiated layered nickel oxide (mAh/g) |
|---|---|---|---|---|
| 0.35 | 0.43 | 70 | 0.833 | 406 |
| 0.35 | 0.48 | 67 | 0.481 | 428 |
| 0.35 | 0.53 | 63 | 0.273 | 416 |
| 0.35 | 0.46 | 69 | 0.591 | 410 |

Thus, Example 2 demonstrates forming alpha-delithiated layered nickel oxide electrochemically active cathode materials according to methods of the disclosure using a higher reaction temperature for the acid-promoted disproportionation step relative to Example 1, having somewhat higher gravimetric discharge capacities than those of the alpha-delithiated layered nickel oxide materials of Example 1. Example 2 further demonstrates the formation of a beta-delithiated layered nickel oxide electrochemically active cathode material of the disclosure.

**Example 3.** Preparation of alpha-delithiated layered nickel oxide via treatment of nonstoichiometric layered lithium nickel oxide with sulfuric acid only.

To deionized water in a 1 liter glass reactor fitted with a heating mantle, nonstoichiometric layered lithium nickel oxide having excess nickel content ($Li_{1-a}Ni_{1+a}O_2$, $0.02 \leq a \leq 0.2$) was added with stirring to form a suspension having nominally 20 percent solids by weight. The stirred suspension was heated at a rate of about 1°C/min to about 50-55°C. A 60% by weight sulfuric acid solution was added in portions during a period of 30 minutes such that the temperature remained below about 65°C and the total amount of acid added was 0.95 moles of acid per mole of nickel. The resulting mixture containing about 17% by weight solids was held at 60°C and stirred for a total of 5-6 hours. The solid product was allowed to settle and was separated from the green-colored supernatant solution containing by decantation while still warm. The solid product was washed repeatedly with deionized water to remove soluble Ni(ll) complexes, nickel and lithium sulfates, and any residual sulfuric acid. The washed solid product was collected by vacuum filtration and then dried at 60-80°C in air for about 12 hours. Yield of dried product was about 45-49% (wt/wt). The dried product still contained about 0.3% by weight of residual lithium in the crystal lattice as determined by ICP-AES. The low-rate (e.g., 10 mA/g, C/40) discharge capacity of dried product provided as the cathode active material in a 635-type alkaline button cell was about 420 to 425 mAh/g. The average Ni oxidation state typically ranged from 3.45 to 3.50. The mean primary particle size (i.e., $D_{50}$) of the alpha-delithiated layered nickel oxide product was about 5.0 microns. This represented a nearly 20% reduction in mean primary particle size compared to that of the precursor layered lithium nickel oxide.

The dried alpha-delithiated layered nickel oxide was thoroughly mixed with a suitable volume of 8.7M potassium hydroxide aqueous solution to form a semi-solid mixture containing 0.2 mole KOH (salt) per mole of the nickel oxide. The mixture was sealed in a polyethylene bottle and held at room temperature for 12-24 hours to form the beta-delithiated layered nickel oxide. The semi-solid mixture was washed with multiple aliquots of deionized water to remove unreacted KOH. The washed beta-delithiated layered nickel oxide product was dried at 70°C in air for about 12 hours. However, the beta-delithiated layered nickel oxide also contains a variable amount of gamma-NiOOH as a side product, typically less than 10% by weight as estimated by comparison of its powder x-ray diffraction pattern with the x-ray diffraction patterns for a series of weighed physical blends of a beta-delithiated layered nickel oxide sample having a nearly undetectable level of gamma-NiOOH and a sample of nominally pure gamma-NiOOH.

Thus, Example 3 demonstrates the preparation of alpha-delithiated layered nickel oxide by a method not of the disclosure and including only the acid-promoted disproportionation of Ni(III) of the nonstoichiometric layered lithium nickel oxide to Ni(IV) and water soluble Ni(ll) with sulfuric acid solution. The use of acid-promoted disproportionation for delithiation of the lithium nickel oxide precursor results in dissolution of about 50% of the nickel as $Ni^{2+}$ and thereby affords a solid reaction product yield of less than 50% by weight, for example, 47% yield. Example 3 further demonstrates that as a consequence of the dissolution of more than 50% of the nickel, the mean primary particle size of the alpha-delithiated layered nickel oxide product is from 20 to 30% smaller than that of corresponding particles of the layered lithium nickel oxide precursor. Thus, Examples 2 and 3, together, demonstrate that the methods of the disclosure can be used to prepare beta-delithiated layered nickel oxide at higher yield, having comparable or higher electrochemical discharge capacity in an alkaline cell and larger primary particle size, while maintaining comparable or lower amounts of gamma-NiOOH side product in the final material relative to a prior art delithiation method using only acid-promoted disproportionation.

**Example 4.** Preparation of alpha-delithiated layered nickel oxide via treatment of nonstoichiometric layered lithium nickel oxide with an excess amount of sodium peroxydisulfate only.

To deionized water in a 1 liter glass reactor fitted with a heating mantle, nonstoichiometric layered lithium nickel oxide having excess nickel content ($Li_{1-a}Ni_{1+a}O_2$, $0.02 \leq a \leq 0.2$) was added with stirring to form a suspension having nominally 25 percent solids by weight. Solid sodium peroxydisulfate was added in portions to the stirred suspension such that the total amount of persulfate added was 0.75 mole of persulfate per mole of nickel oxide. The stirred mixture was heated at a rate of about 1°C/min to 85°C and held at that temperature for 5 hours. The initial pH of the suspension of lithium nickel oxide precursor was greater than 12 prior to the addition of persulfate. After addition of persulfate was complete and the temperature had reached 60°C, the pH decreased to 10. After stirring for 5 hours at 85°C, the pH decreased further to less than 5. At this time, stirring was stopped and the solid product allowed to settle. The solid product was separated from the dark green-colored supernatant solution containing $Ni^{2+}$ by decantation while still warm. The solid product was washed repeatedly with deionized water and decanted to remove soluble nickel and lithium sulfates, and unreacted sodium persulfate. Finally, the washed solid product was collected by suction filtration and dried at 60-80°C in air for about 12 hours. Yield of dried product was about 65-70% (wt/wt). The dried product still contained about 0.6% by weight of residual lithium in the crystal lattice as determined by ICP-AES. The low-rate (e.g., 10 mA/g, ⌣C/40) discharge capacity of the alpha-delithiated layered nickel oxide in a 635-type alkaline button cell was about 425 to 430 mAh/g. The mean primary particle size (i.e., $D_{50}$) of the alpha-delithiated layered nickel oxide was about 5.1 microns. This represents a 20% reduction in mean primary particle size compared to that of the precursor layered lithium nickel oxide.

The alpha-delithiated layered nickel oxide was thoroughly mixed with a suitable volume of 8.7M potassium hydroxide aqueous solution to form a semi-solid mixture containing 0.2 mole KOH (salt) per mole of the nickel oxide. The mixture was sealed in a polyethylene bottle and held at room temperature for 12-24 hours to form the beta-delithiated layered nickel oxide. The semi-solid mixture was washed with multiple aliquots of deionized water to remove unreacted KOH. The washed beta-delithiated layered nickel oxide product was dried at 70°C in air for about 12 hours. However, the beta-delithiated layered nickel oxide also contains a variable amount of gamma-NiOOH as a side product, typically less than 10% by weight as estimated from its powder x-ray diffraction pattern.

Thus, Example 4 demonstrates the preparation of alpha-delithiated layered nickel oxide by a method not of the disclosure and including only the oxidative delithiation of the non-stoichiometric layered nickel oxide precursor using an excess amount of sodium persulfate. Because of the accelerated rate of thermal decomposition of persulfate at 85°C to form sulfuric acid, as evidenced by the decrease in pH with reaction time, the yield of alpha-delithiated layered nickel oxide was decreased. The presence of sulfuric acid also promoted some disproportionation to take place resulting in the mean primary particle size of the alpha-delithiated layered nickel oxide to range from 20 to 30% smaller than that of the lithium nickel oxide precursor. Additionally, the process of Example 4 required treatment with 50% more sodium persulfate at 85°C for 5 hours, in contrast to Example 2, a method of the disclosure that was completed with less sodium persulfate and only needed to be heated to 50°C for 3 hours and 70°C for 3 hours to arrive at similar yields. Thus, Examples 2 and 4, together, demonstrate that the methods of the disclosure can be used to prepare beta-delithiated layered nickel oxide at higher yield, less energy consumption (i.e., energy use of 85°C for 5 hours > 50°C for 3 hours + 70°C for 3 hours), having comparable or higher electrochemical discharge capacity in an alkaline cell, and a larger primary particle size, using 50% less sodium persulfate, while maintaining comparable or lower amounts of gamma-NiOOH side product in the final material relative to a prior art delithiation method using a substantially larger amount of sodium peroxydisulfate at a higher reaction temperature.

The foregoing description is given for clearness of understanding only, and no unnecessary limitations should be understood therefrom, as modifications within the scope of the disclosure may be apparent to those having ordinary skill in the art.

**Claims**

1. A method of preparing an electrochemically active cathode material, comprising:

(a) combining an alkali metal-containing layered nickel oxide having a formula $A_{1-a}Ni_{1+a}O_2$, wherein A comprises an alkali metal and $0 < a \leq 0.2$, with a fluid composition including a chemical oxidant comprising a peroxydisulfate salt, a monopersulfate salt, or a combination thereof to form a mixture;
(b) heating the mixture for at least a period of time sufficient to form a Ni(IV)-containing mixture, the Ni(IV)-containing mixture comprising a Ni(IV)-containing alkali metal-deficient layered nickel oxide electrochemically active cathode material, the Ni(IV) containing mixture having a total nickel (Ni) content;
(c) adding to the Ni(IV)-containing mixture of step (b) a mineral acid, wherein the mineral acid is added in an amount of about 0.60 moles or less per mole of total nickel; and
(d) heating the mixture of step (c) for at least a period of time sufficient to form an additional amount of the Ni(IV)-containing alkali metal-deficient layered nickel oxide electrochemically active cathode material, the Ni(IV)-containing alkali metal-deficient layered nickel oxide electrochemically active cathode material formed during steps (b) and (d) having the general formula $A_xH_yNi_{1+a}O_2$:

wherein
A comprises an alkali metal;

$$0.08 \leq x < 0.2;$$

$$0 \leq y < 0.3;$$

and

$$0.02 < a \le 0.2.$$

2. The method of claim 1, wherein the alkali metal-containing layered nickel oxide is doped with a metal, M, such that the alkali metal-containing layered nickel oxide has a formula $A_{1-a}Ni_{1+a-z}M_zO_2$, wherein A comprises an alkali metal, $0 < a \le 0.2$, and $0 \le z \le 0.2$.

3. The method of claim 1 or claim 2, wherein the (i) oxidant comprises peroxydisulfate salt and/or (ii) wherein A comprises Li.

4. The method of any one of claims 2 to 3, wherein M comprises a transition metal, a main group metal, or both.

5. The method of any one of claims 2 to 4, wherein M comprises (a) cobalt (Co), manganese (Mn), iron (Fe), chromium (Cr), vanadium (V), titanium (Ti), niobium (Nb), zirconium (Zr), or a combination thereof; or (b) aluminum (Al), gallium (Ga), bismuth (Bi), or a combination thereof.

6. The method of any one of the preceding claims, wherein (i) in step (b) the time sufficient to form the Ni(IV) containing mixture is 15 minutes to 6 hours, 15 minutes to 5 hours, 15 minutes to 4 hours, 20 minutes to 4 hours, 20 minutes to 3 hours, 30 minutes to 2 hours, 30 minutes to 1 hour, 15 minutes to 45 minutes, 1 hour to 5 hours, or 2 hours to 4 hours;

   (ii) in step (d) the time sufficient to form the Ni(IV) containing alkali metal-deficient layered nickel oxide electrochemically active cathode material is 1 hour to 6 hours, 1 hour to 5.5 hours, 1 hour to 5 hours, 2 hours to 4 hours, or 3 hours; and/or
   (iii) in step (c) the mineral acid comprises sulfuric acid, nitric acid, hydrochloric acid, hydrobromic acid, perchloric acid, hydroiodic acid, or a combination thereof.

7. The method of any one of the preceding claims, wherein (i) in step (a) the oxidant is provided in an amount between 0.25 and 0.70 moles per mole of the alkali metal-containing layered nickel oxide, preferably in an amount of 0.25 moles, 0.30 moles, 0.35 moles, 0.40 moles, 0.45 moles, 0.50 moles, 0.55 moles, 0.60 moles, 0.65 moles, or 0.70 moles per mole of the alkali metal-containing layered nickel oxide; and/or
   (ii) in step (b) the temperature is less than 60°C, for example, in a range of 45°C to 55°C, 45°C to 50°C, 50°C to less than 60°C, or 50°C to 55°C.

8. The method of any one of the preceding claims, wherein (i) in step (c) the mineral acid is provided in an amount of 0.40 to 0.55 moles per mole of the total nickel, 0.45 to 0.55, 0.50 to 0.55, 0.40 to 0.45, 0.45 to 0.50 moles of mineral acid per mole of the total nickel; and/or
   (ii) in step (d) the temperature is 60°C to 80°C, 60°C to 75°C, 60°C to 70°C, 65°C to 75°C, 68°C to 72°C, 60°C, 65°C, 70°C, 75°C, or 80°C.

9. The method of any one of claims 1 to 6, wherein (i) in step (a) the oxidant is provided in an amount of 1 mole per mole of the alkali metal-containing layered nickel oxide, or in a range of 1 to 2 moles of oxidant, 1.3 to 2 moles of oxidant, 1.5 to 2 moles of oxidant, 1 to 1.9 moles of oxidant, 1.3 to 1.8 moles or oxidant, or 1.4 to 1.7 moles of oxidant per mole of the alkali metal-containing layered nickel oxide; and/or
   (ii) in step (b) the temperature is a temperature of 45°C to less than 60°C, 45°C to 55°C, 45°C to 50°C, 50°C to less than 60°C, or 50°C to 55°C.

10. The method of claim 9, wherein in step (c) the mineral acid is provided in an amount of 0.20 moles to 0.40 moles per mole of the total nickel, or 0.25 moles to 0.35 moles per mole of the total nickel, or 0.30 moles per mole of the total nickel; and/or
    wherein in step (d) the temperature is 60°C to 80°C, 60°C to 75°C, 60°C to 70°C, 65°C to 75°C, 68°C to 72°C, 60°C, 65°C, 70°C, 75°C, or 80°C.

11. The method of any one of the preceding claims, wherein (i) the oxidant comprises a counter cation selected from the group consisting of ammonium, sodium, potassium, lithium, or a combination thereof;

    (ii) x has a value of 0.01 to 0.20, 0.01 to 0.18, 0.01 to 0.16, 0.01 to 0.15, 0.02 to 0.20, 0.02 to 0.18, 0.02 to 0.16, 0.02 to 0.15, 0.03 to 0.20, 0.03 to 0.19, 0.03 to 0.15, 0.03 to 0.12, 0.05 to 0.19, or 0.05 to 0.15;

(iii) wherein z has a value of 0 to 0.20, 0.01 to 0.20, 0.01 to 0.18, 0.01 to 0.16, 0.01 to 0.15, 0.02 to 0.20, 0.02 to 0.18, 0.02 to 0.16, 0.02 to 0.15, 0.03 to 0.20, 0.03 to 0.19, 0.03 to 0.15, 0.03 to 0.12, 0.05 to 0.19, or 0.05 to 0.15;

(iv) wherein y has a value of 0 to 0.29, 0.05 to 0.25, 0.5 to 0.20, 0.5 to 0.15, 0.08 to 0.29, 0.08 to 0.25, 0.08 to 0.20, 0.08 to 0.15, 0.10 to 0.29, 0.10 to 0.25, 0.10 to 0.20, or 0.10 to 0.15; and/or

(v) a has a value of 0.02 to 0.20, 0.02 to 0.18, 0.02 to 0.16, 0.02 to 0.15, 0.03 to 0.20, 0.03 to 0.18, 0.03 to 0.16, 0.03 to 0.15, 0.04 to 0.20, 0.04 to 0.18, 0.04 to 0.15, 0.04 to 0.12, 0.05 to 0.19, or 0.05 to 0.15.

12. The method of any one of the preceding claims, wherein (i) in step (a) the alkali metal-containing layered nickel oxide and the oxidant are provided in a molar ratio of 1 mol alkali metal-containing layered nickel oxide :0.25 mol oxidant to 1 mol alkali metal-containing layered nickel oxide :0.70 mol oxidant, which equals to 1:0.25 to 1:0.70, 1:0.25 to 1:0.65, 1:0.25 to 1:0.60, 1:0.25 to 1:0.50, 1:0.25 to 1:0.45, 1:0.30 to 1:0.70, 1:0.30 to 1:0.65, 1:0.30 to 1:0.55, 1:0.30 to 1:0.45, 1:0.35 to 1:0.70, 1:0.35 to 1:0.65, 1:0.35 to 1:0.60, 1:0.35 to 1:0.55, 1:0.35 to 1:0.50, 1:0.35 to 1:0.45, or 1:0.35 to 1:0.40; and/or

(ii) in step (a) the fluid composition has a pH in a range of 4 to 12, 4 to 11, 4 to 10, or 4 to 9, 9 to 12, 10 to 12, or 11 to 12.

13. The method of any one of the preceding claims, further comprising treating the Ni(IV)-containing alkali metal-deficient nickel oxide with an aqueous solution of an alkali hydroxide to form a compound according to the formula: $A_xA'_vNi_{1+a}O_2 \cdot nH_2O$ or $A_xA'_vNi_{1+a-z}M_zO_2 \cdot nH_2O$,

wherein A comprises Li, or Na;
M comprises a transition metal;
A' comprises K, Rb or Cs;

$$0.04 \leq x < 0.2;$$

$$0.03 < v < 0.20;$$

$$0.02 \leq a \leq 0.2;$$

$$0 \leq z \leq 0.2;$$

and

$$0 < n < 2.$$

14. The method of claim 13, wherein (a) the alkali hydroxide comprises potassium hydroxide, rubidium hydroxide, cesium hydroxide, or a combination thereof; and/or (b) A comprises Li and A' comprises K.

15. The method of any one of claims 1 to 8 or 11 to 12, wherein in step (a) the oxidant comprises a peroxydisulfate salt and is provided in an amount of 0.25 to 0.45 moles per mole of the alkali metal-containing layered nickel oxide, in step (b) the mixture is heated to a temperature of 45°C to 55°C for 2 to 4 hours, in step (c) the mineral acid comprises sulfuric acid and is provided in an amount of 0.4 to 0.55 moles per mole of the total nickel, and in step (d) the mixture is heated to a temperature of 65°C to 75°C for 2 to 4 hours.

**Patentansprüche**

1. Verfahren zur Herstellung eines elektrochemisch aktiven Kathodenmaterials, bei dem

(a) ein alkalimetallhaltiges geschichtetes Nickeloxid mit der Formel $A_{1-a}Ni_{1+a}O_2$, wobei A ein Alkalimetall umfasst und $0 < a \leq 0{,}2$, mit einer Fluidzusammensetzung kombiniert wird, die chemisches Oxidationsmittel einschließt, das Peroxydisulfatsalz, Monopersulfatsalz oder eine Kombination davon umfasst, um eine Mischung zu bilden;

(b) die Mischung für mindestens einen ausreichenden Zeitraum erwärmt wird, um eine Ni(IV)-haltige Mischung zu bilden, wobei die Ni(IV)-haltige Mischung ein Ni(IV)-haltiges, alkalimetalldefizitäres geschichtetes Nickeloxid als elektrochemisch aktives Kathodenmaterial umfasst, wobei die Ni(IV)-haltige Mischung einen Gehalt an Gesamtnickel (Ni) aufweist;

(c) der Ni(IV)-haltigen Mischung aus Schritt (b) Mineralsäure zugegeben wird, wobei die Mineralsäure in einer Menge von etwa 0,60 Mol oder weniger pro Mol Gesamtnickel zugegeben wird; und

(d) die Mischung aus Schritt (c) für mindestens einen ausreichenden Zeitraum erwärmt wird, um eine zusätzliche Menge des Ni(IV)-haltigen, alkalimetalldefizitären geschichteten Nickeloxids als elektrochemisch aktives Kathodenmaterial zu bilden, wobei das Ni(IV)-haltige, alkalimetalldefizitäre geschichtete Nickeloxid als elektrochemisch aktives Kathodenmaterial, das während der Schritte (b) und (d) gebildet wurde, die allgemeine Formel $A_xH_yNi_{1+a}O_2$ aufweist;

wobei

A Alkalimetall umfasst,

$$0,08 \leq x < 0,2,$$

$$0 \leq y < 0,3$$

und

$$0,02 < a \leq 0,2.$$

2. Verfahren nach Anspruch 1, bei dem das alkalimetallhaltige geschichtete Nickeloxid mit einem Metall, M, dotiert wird, so dass das alkalimetallhaltige geschichtete Nickeloxid eine Formel $A_{1-a}Ni_{1+a-z}M_zO_2$ aufweist, wobei A Alkalimetall umfasst, $0 < a \leq 0,2$, und $0 \leq z \leq 0,2$.

3. Verfahren nach Anspruch 1 oder Anspruch 2, bei dem (i) das Oxidationsmittel Peroxydisulfatsalz umfasst, und/oder (ii) wobei A Li umfasst.

4. Verfahren nach einem der Ansprüche 2 bis 3, bei dem M Übergangsmetall, Hauptgruppenmetall oder beide umfasst.

5. Verfahren nach einem der Ansprüche 2 bis 4, bei dem M (a) Kobalt (Co), Mangan (Mn), Eisen (Fe), Chrom (Cr), Vanadium (V), Titan (Ti), Niob (Nb), Zirconium (Zr) oder eine Kombination davon oder (b) Aluminium (Al), Gallium (Ga), Bismut (Bi) oder eine Kombination davon umfasst.

6. Verfahren nach einem der vorhergehenden Ansprüche, bei dem (i) in Schritt (b) die Zeit, die ausreichend ist, um die Ni(IV)-haltige Mischung zu bilden, 15 Minuten bis 6 Stunden, 15 Minuten bis 5 Stunden, 15 Minuten bis 4 Stunden, 20 Minuten bis 4 Stunden, 20 Minuten bis 3 Stunden, 30 Minuten bis 2 Stunden, 30 Minuten bis 1 Stunde, 15 Minuten bis 45 Minuten, 1 Stunde bis 5 Stunden oder 2 Stunden bis 4 Stunden beträgt,

(ii) in Schritt (d) die Zeit, die ausreichend ist, um das Ni(IV)-haltige alkalimetalldefizitäre geschichtete Nickeloxid als elektrochemisch aktives Kathodenmaterial zu bilden, 1 Stunde bis 6 Stunden, 1 Stunde bis 5,5 Stunden, 1 Stunde bis 5 Stunden, 2 Stunden bis 4 Stunden, oder 3 Stunden beträgt, und/oder

(iii) in Schritt (c) die Mineralsäure Schwefelsäure, Salpetersäure, Salzsäure, Bromwasserstoffsäure, Perchlorsäure, Iodwasserstoffsäure oder eine Kombination davon umfasst.

7. Verfahren nach einem der vorhergehenden Ansprüche, bei dem (i) in Schritt (a) das Oxidationsmittel in einer Menge zwischen 0,25 und 0,70 Mol pro Mol des alkalimetallhaltigen geschichteten Nickeloxids bereitgestellt wird, vorzugsweise in einer Menge von 0,25 Mol, 0,30 Mol, 0,35 Mol, 0,40 Mol, 0,45 Mol, 0,50 Mol, 0,55 Mol, 0,60 Mol, 0,65 Mol oder 0,70 Mol pro Mol des alkalimetallhaltigen geschichteten Nickeloxids, und/oder (ii) in Schritt (b) die Temperatur weniger als 60°C beträgt, beispielsweise in einem Bereich von 45°C bis 55°C, 45°C bis 50°C, 50°C bis weniger als 60°C, oder 50°C bis 55°C liegt.

8. Verfahren nach einem der vorhergehenden Ansprüche, bei dem (i) in Schritt (c) die Mineralsäure in einer Menge von 0,40 bis 0,55 Mol pro Mol des Gesamtnickels, 0,45 bis 0,55, 0,50 bis 0,55, 0,40 bis 0,45, 0,45 bis 0,50 Mol Mineralsäure pro Mol des Gesamtnickels bereitgestellt wird, und/oder (ii) in Schritt (d) die Temperatur 60°C bis 80°C, 60°C bis 75°C, 60°C bis 70°C, 65°C bis 75°C, 68°C bis 72°C, 60°C, 65°C, 70°C, 75°C oder 80°C beträgt.

9. Verfahren nach einem der Ansprüche 1 bis 6, bei dem (i) in Schritt (a) das Oxidationsmittel in einer Menge von 1 Mol pro Mol des alkalimetallhaltigen geschichteten Nickeloxids bereitgestellt wird, oder in einem Bereich von 1 bis 2 Mol Oxidationsmittel, 1,3 bis 2 Mol Oxidationsmittel, 1,5 bis 2 Mol Oxidationsmittel, 1 bis 1,9 Mol Oxidationsmittel, 1,3 bis 1,8 Mol Oxidationsmittel, oder 1,4 bis 1,7 Mol Oxidationsmittel pro Mol des alkalimetallhaltigen geschichteten Nickeloxids, und/oder

(ii) in Schritt (b) die Temperatur eine Temperatur von 45°C bis weniger als 60°C, 45°C bis 55°C, 45°C bis 50°C, 50°C bis weniger als 60°C, oder 50°C bis 55°C ist.

10. Verfahren nach Anspruch 9, bei dem in Schritt (c) die Mineralsäure in einer Menge von 0,20 Mol bis 0,40 Mol pro Mol des Gesamtnickels, oder 0,25 Mol bis 0,35 Mol pro Mol des Gesamtnickels, oder 0,30 Mol pro Mol des Gesamtnickels bereitgestellt wird, und/oder

wobei in Schritt (d) die Temperatur 60°C bis 80°C, 60°C bis 75°C, 60°C bis 70°C, 65°C bis 75°C, 68°C bis 72°C, 60°C, 65°C, 70°C, 75°C oder 80°C beträgt.

11. Verfahren nach einem der vorhergehenden Ansprüche, bei dem (i) das Oxidationsmittel ein Gegenkation ausgewählt aus der Gruppe bestehend aus Ammonium, Natrium, Kalium, Lithium oder einer Kombination davon umfasst,

(ii) x einen Wert von 0,01 bis 0,20, 0,01 bis 0,18, 0,01 bis 0,16, 0,01 bis 0,15, 0,02 bis 0,20, 0,02 bis 0,18, 0,02 bis 0,16, 0,02 bis 0,15, 0,03 bis 0,20, 0,03 bis 0,19, 0,03 bis 0,15, 0,03 bis 0,12, 0,05 bis 0,19, oder 0,05 bis 0,15 aufweist,

(iii) wobei z einen Wert von 0 bis 0,20, 0,01 bis 0,20, 0,01 bis 0,18, 0,01 bis 0,16, 0,01 bis 0,15, 0,02 bis 0,20, 0,02 bis 0,18, 0,02 bis 0,16, 0,02 bis 0,15, 0,03 bis 0,20, 0,03 bis 0,19, 0,03 bis 0,15, 0,03 bis 0,12, 0,05 bis 0,19, oder 0,05 bis 0,15 aufweist,

(iv) wobei y einen Wert von 0 bis 0,29, 0,05 bis 0,25, 0,5 bis 0,20, 0,5 bis 0,15, 0,08 bis 0,29, 0,08 bis 0,25, 0,08 bis 0,20, 0,08 bis 0,15, 0,10 bis 0,29, 0,10 bis 0,25, 0,10 bis 0,20, oder 0,10 bis 0,15 aufweist, und/oder

(v) a einen Wert von 0,02 bis 0,20, 0,02 bis 0,18, 0,02 bis 0,16, 0,02 bis 0,15, 0,03 bis 0,20, 0,03 bis 0,18, 0,03 bis 0,16, 0,03 bis 0,15, 0,04 bis 0,20, 0,04 bis 0,18, 0,04 bis 0,15, 0,04 bis 0,12, 0,05 bis 0,19, oder 0,05 bis 0,15 aufweist.

12. Verfahren nach einem der vorhergehenden Ansprüche, bei dem (i) in Schritt (a) das alkalimetallhaltige geschichtete Nickeloxid und das Oxidationsmittel in einem molaren Verhältnis von 1 Mol alkalimetallhaltiges geschichtetes Nickeloxid:0,25 Mol Oxidationsmittel bis 1 Mol alkalimetallhaltiges geschichtetes Nickeloxid:0,70 Mol Oxidationsmittel bereitgestellt werden, was 1:0,25 bis 1:0,70 entspricht, 1:0,25 bis 1:0,65, 1:0,25 bis 1:0,60, 1:0,25 bis 1:0,50, 1:0,25 bis 1:0,45, 1:0,30 bis 1:0,70, 1:0,30 bis 1:0,65, 1:0,30 bis 1:0,55, 1:0,30 bis 1:0,45, 1:0,35 bis 1:0,70, 1:0,35 bis 1:0,65, 1:0,35 bis 1:0,60, 1:0,35 bis 1:0,55, 1:0,35 bis 1:0,50, 1:0,35 bis 1:0,45, oder 1:0,35 bis 1:0,40 und/oder

(ii) in Schritt (a) die Fluidzusammensetzung einen pH-Wert im Bereich von 4 bis 12, 4 bis 11, 4 bis 10, oder 4 bis 9, 9 bis 12, 10 bis 12, oder 11 bis 12 aufweist.

13. Verfahren nach einem der vorhergehenden Ansprüche, bei dem des Weiteren das Ni(IV)-haltige alkalimetalldefizitäre Nickeloxid mit einer wässrigen Lösung von Alkalihydroxid behandelt wird, um eine Verbindung mit der folgenden Formel zu bilden: $A_xA'_vNi_{1+a}O_2 \cdot nH_2O$ oder $A_xA'_vN_{1+a-z}M_zO_2 \cdot nH_2O$,

wobei A Li oder Na umfasst,
M Übergangsmetall umfasst,
A' K, Rb oder Cs umfasst,

$$0,04 \leq x < 0,2,$$

$$0,03 < v < 0,20,$$

$$0,02 \leq a \leq 0,2,$$

$$0 \leq z \leq 0,2$$

und

$$0 < n < 2.$$

**14.** Verfahren nach Anspruch 13, bei dem (a) das Alkalimetallhydroxid Kaliumhydroxid, Rubidiumhydroxid, Cäsiumhydroxid oder eine Kombination davon umfasst, und/oder (b) A Li umfasst und A' K umfasst.

**15.** Verfahren nach einem der Ansprüche 1 bis 8 oder 11 bis 12, bei dem in Schritt (a) das Oxidationsmittel Peroxydisulfatsalz umfasst und in einer Menge von 0,25 bis 0,45 Mol pro Mol des alkalimetallhaltigen geschichteten Nickeloxids bereitgestellt wird, in Schritt (b) die Mischung 2 bis 4 Stunden auf eine Temperatur von 45°C bis 55°C erwärmt wird, in Schritt (c) die Mineralsäure Schwefelsäure umfasst und in einer Menge von 0,4 bis 0,55 Mol pro Mol des Gesamtnickels bereitgestellt wird, und in Schritt (d) die Mischung 2 bis 4 Stunden auf eine Temperatur von 65°C bis 75°C erwärmt wird.

## Revendications

**1.** Procédé de préparation d'un matériau de cathode électrochimiquement actif, comprenant les étapes consistant à :

a) combiner un oxyde de nickel stratifié contenant un métal alcalin ayant la formule $A_{1-a}Ni_{1+a}O_2$, dans lequel A comprend un métal alcalin et $0 < a \leq 0,2$, avec une composition fluide comprenant un oxydant chimique comprenant un sel de peroxydisulfate, un sel de monopersulfate ou une combinaison de ceux-ci pour former un mélange ;
b) chauffer le mélange pendant au moins une période de temps suffisante pour former un mélange contenant du Ni(IV), le mélange contenant du Ni(IV) comprenant un matériau de cathode électrochimiquement actif à base d'oxyde de nickel stratifié déficient en métal alcalin et contenant du Ni(IV), le mélange contenant du Ni(IV) ayant une teneur totale en nickel (Ni) ;
c) ajouter au mélange contenant du Ni(IV) de l'étape (b) un acide minéral, dans lequel l'acide minéral est ajouté en une quantité d'environ 0,60 mole ou moins par mole de nickel total ; et
d) chauffer le mélange de l'étape (c) pendant au moins une période de temps suffisante pour former une quantité supplémentaire de matériau de cathode électrochimiquement actif à base d'oxyde de nickel stratifié déficient en métal alcalin et contenant du Ni(IV), le matériau de cathode électrochimiquement actif à base d'oxyde de nickel stratifié déficient en métal alcalin et contenant du Ni(IV) formé pendant les étapes (b) et (d) ayant la formule générale $A_xH_yNi_{1+a}O_2$ :

dans lequel
A comprend un métal alcalin ;

$$0,08 \leq x < 0,2 ;$$

$$0 \leq y < 0,3 ;$$

et

$$0,02 < a \leq 0,2.$$

**2.** Procédé selon la revendication 1, dans lequel l'oxyde de nickel stratifié contenant un métal alcalin est dopé avec un métal, M, de telle sorte que l'oxyde de nickel stratifié contenant un métal alcalin ait une formule $A_{1-a}Ni_{1+az}M_zO_2$, dans lequel A comprend un métal alcalin, $0 < a \leq 0,2$, et $0 \leq z \leq 0,2$.

**3.** Procédé selon la revendication 1 ou la revendication 2, dans lequel (i) l'oxydant comprend un sel de peroxydisulfate et/ou (ii) dans lequel A comprend Li.

**4.** Procédé selon l'une quelconque des revendications 2 à 3, dans lequel M comprend un métal de transition, un métal du groupe principal, ou les deux.

**5.** Procédé selon l'une quelconque des revendications 2 à 4, dans lequel M comprend (a) du cobalt (Co), du manganèse (Mn), du fer (Fe), du chrome (Cr), du vanadium (V), du titane (Ti), du niobium (Nb), du zirconium (Zr) ou une combinaison de ceux-ci ; ou (b) de l'aluminium (Al), du gallium (Ga), du bismuth (Bi) ou une combinaison de ceux-ci.

6. Procédé selon l'une quelconque des revendications précédentes, dans lequel (i) à l'étape (b), le temps suffisant pour former le mélange contenant du Ni(IV) est de 15 minutes à 6 heures, 15 minutes à 5 heures, 15 minutes à 4 heures, 20 minutes à 4 heures, 20 minutes à 3 heures, 30 minutes à 2 heures, 30 minutes à 1 heure, 15 minutes à 45 minutes, 1 heure à 5 heures, ou 2 heures à 4 heures ;

   (ii) à l'étape (d), le temps suffisant pour former le matériau de cathode électrochimiquement actif à base d'oxyde de nickel stratifié déficient en métal alcalin et contenant du Ni(IV) est de 1 heure à 6 heures, de 1 heure à 5,5 heures, de 1 heure à 5 heures, de 2 heures à 4 heures ou de 3 heures ; et/ou
   (iii) à l'étape (c), l'acide minéral comprend de l'acide sulfurique, de l'acide nitrique, de l'acide chlorhydrique, de l'acide bromhydrique, de l'acide perchlorique, de l'acide iodhydrique ou une combinaison de ceux-ci.

7. Procédé selon l'une quelconque des revendications précédentes, dans lequel (i) à l'étape (a), l'oxydant est fourni en une quantité comprise entre 0,25 et 0,70 mole par mole d'oxyde de nickel stratifié contenant un métal alcalin, de préférence en une quantité de 0,25 mole, 0,30 mole, 0,35 mole, 0,40 mole, 0,45 mole, 0,50 mole, 0,55 mole, 0,60 mole, 0,65 mole ou 0,70 mole par mole d'oxyde de nickel stratifié contenant un métal alcalin ; et/ou
   (ii) dans l'étape (b), la température est inférieure à 60 °C, par exemple dans une plage de 45 °C à 55 °C, de 45 °C à 50 °C, de 50 °C à moins de 60 °C, ou de 50 °C à 55 °C.

8. Procédé selon l'une quelconque des revendications précédentes, dans lequel (i) à l'étape (c), l'acide minéral est fourni en une quantité de 0,40 à 0,55 mole par mole de nickel total, de 0,45 à 0,55, 0,50 à 0,55, 0,40 à 0,45, 0,45 à 0,50 mole d'acide minéral par mole de nickel total ; et/ou
   (ii) à l'étape (d), la température est comprise entre 60 °C et 80 °C, entre 60 °C et 75 °C, entre 60 °C et 70 °C, 65 °C à 75 °C, 68 °C à 72 °C, 60 °C, 65 °C, 70 °C, 75 °C ou 80 °C.

9. Procédé selon l'une quelconque des revendications 1 à 6, dans lequel (i) à l'étape (a), l'oxydant est fourni en une quantité de 1 mole par mole d'oxyde de nickel stratifié contenant un métal alcalin, ou dans une plage de 1 à 2 moles d'oxydant, 1,3 à 2 moles d'oxydant, 1,5 à 2 moles d'oxydant, 1 à 1,9 mole d'oxydant, 1,3 à 1,8 mole d'oxydant, ou 1,4 à 1,7 mole d'oxydant par mole d'oxyde de nickel stratifié contenant un métal alcalin ; et/ou
   (ii) dans l'étape (b), la température est une température comprise entre 45 °C et moins de 60 °C, entre 45 °C et 55 °C, entre 45 °C et 50 °C, entre 50 °C et moins de 60 °C, ou entre 50 °C et 55 °C.

10. Procédé selon la revendication 9, dans lequel, à l'étape (c), l'acide minéral est fourni en une quantité de 0,20 mole à 0,40 mole par mole de nickel total, ou de 0,25 mole à 0,35 mole par mole de nickel total, ou de 0,30 mole par mole de nickel total ; et/ou
   dans lequel, à l'étape (d), la température est comprise entre 60 °C et 80 °C, entre 60 °C et 75 °C, entre 60 °C et 70 °C, 65 °C à 75 °C, 68 °C à 72 °C, 60 °C, 65 °C, 70 °C, 75 °C ou 80 °C.

11. Procédé selon l'une quelconque des revendications précédentes, dans lequel (i) l'oxydant comprend un contre-cation choisi dans le groupe constitué de l'ammonium, le sodium, le potassium, le lithium ou une combinaison de ceux-ci ;

   (ii) $x$ a une valeur de 0,01 à 0,20, 0,01 à 0,18, 0,01 à 0,16, 0,01 à 0,15, 0,02 à 0,20, 0,02 à 0,18, 0,02 à 0,16, 0,02 à 0,15, 0,03 à 0,20, 0,03 à 0,19, 0,03 à 0,15, 0,03 à 0,12, 0,05 à 0,19, ou 0,05 à 0,15 ;
   (iii) où $z$ a une valeur comprise entre 0 et 0,20, 0,01 et 0,20, 0,01 et 0,18, 0,01 et 0,16, 0,01 et 0,15, 0,02 à 0,20, 0,02 à 0,18, 0,02 à 0,16, 0,02 à 0,15, 0,03 à 0,20, 0,03 à 0,19, 0,03 à 0,15, 0,03 à 0,12, 0,05 à 0,19, ou 0,05 à 0,15 ;
   (iv) où $y$ a une valeur comprise entre 0 et 0,29, 0,05 et 0,25, 0,5 et 0,20, 0,5 et 0,15, 0,08 et 0,29, 0,08 à 0,25, 0,08 à 0,20, 0,08 à 0,15, 0,10 à 0,29, 0,10 à 0,25, 0,10 à 0,20 ou 0,10 à 0,15 ; et/ou
   (v) $a$ a une valeur comprise entre 0,02 et 0,20, 0,02 et 0,18, 0,02 et 0,16, 0,02 et 0,15, 0,03 et 0,20, 0,03 et 0,18, 0,03 à 0,16, 0,03 à 0,15, 0,04 à 0,20, 0,04 à 0,18, 0,04 à 0,15, 0,04 à 0,12, 0,05 à 0,19, ou 0,05 à 0,15.

12. Procédé selon l'une quelconque des revendications précédentes, dans lequel (i) à l'étape (a) l'oxyde de nickel stratifié contenant un métal alcalin et l'oxydant sont fournis dans un rapport molaire de 1 mole d'oxyde de nickel stratifié contenant un métal alcalin :0,25 mole d'oxydant à 1 mole d'oxyde de nickel stratifié contenant un métal alcalin :0,70 mole d'oxydant, ce qui équivaut à 1:0,25 à 1:0,70, 1:0,25 à 1:0,65, 1:0,25 à 1:0,60, 1:0,25 à 1:0,50, 1:0,25 à 1:0,45, 1:0,30 à 1:0,70, 1:0,30 à 1:0,65, 1:0,30 à 1:0,55, 1:0,30 à 1:0,45, 1:0,35 à 1:0,70, 1:0,35 à 1:0,65, 1:0,35 à 1:0,60, 1:0,35 à 1:0,55, 1:0,35 à 1:0,50, 1:0,35 à 1:0,45 ou 1:0,35 à 1:0,40 ; et/ou
   (ii) à l'étape (a), la composition fluide a un pH compris dans une plage de 4 à 12, 4 à 11, 4 à 10, ou 4 à 9, 9 à 12, 10 à 12, ou 11 à 12.

13. Procédé selon l'une quelconque des revendications précédentes, comprenant en outre le traitement de l'oxyde de nickel déficient en métal alcalin contenant du Ni(IV) avec une solution aqueuse d'un hydroxyde alcalin pour former un composé selon la formule : $A_x A'_v Ni_{1+a}O_2 \cdot nH_2O$ ou $A_x A'_v Ni_{1+a-z}M_zO_2 \cdot nH_2O$,

dans lequel A comprend Li ou Na ;
M comprend un métal de transition ;
A' comprend K, Rb ou Cs ;

$$0{,}04 \leq x < 0{,}2 \ ;$$

$$0{,}03 < v < 0{,}20 \ ;$$

$$0{,}02 \leq a \leq 0{,}2 \ ;$$

$$0 \leq z \leq 0{,}2 \ ;$$

et

$$0 < n < 2.$$

14. Procédé selon la revendication 13, dans lequel (a) l'hydroxyde alcalin comprend de l'hydroxyde de potassium, de l'hydroxyde de rubidium, de l'hydroxyde de césium ou une combinaison de ceux-ci ; et/ou (b) A comprend Li et A' comprend K.

15. Procédé selon l'une quelconque des revendications 1 à 8 ou 11 à 12, dans lequel dans l'étape (a), l'oxydant comprend un sel de peroxydisulfate et est fourni en une quantité de 0,25 à 0,45 mole par mole d'oxyde de nickel stratifié contenant un métal alcalin, à l'étape (b), le mélange est chauffé à une température de 45 °C à 55 °C pendant 2 à 4 heures, à l'étape (c), l'acide minéral comprend de l'acide sulfurique et est fourni en une quantité de 0,4 à 0,55 mole par mole de nickel total, et à l'étape (d), le mélange est chauffé à une température comprise entre 65 °C et 75 °C pendant 2 à 4 heures.

FIG. 1

## EP 4 524 108 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018331361 A
- US 2013252108 A
- US 5698315 A
- US 5919598 A
- US 5997775 A
- US 7351499 B
- US 6514637 B

**Non-patent literature cited in the description**

- **MATTEO BIANCHINI et al.** Hin und zurück die entwicklung von LiNiO2 als Kathodenaktivmaterial. *Angewante Chemie*, May 2019, vol. 131 (31), 10542-69